# EUROPEAN PATENT APPLICATION

(11) **EP 1 635 267 A1**
(43) Date of publication of application: **15.03.2006**
(21) Application number: 04728273.6
(22) Date of filing: 19.04.2004
(51) Int. Cl.: G06F 15/00, G06F 13/00, H04B 7/26

(54) **SERVICE UTILIZATION TERMINAL FOR PROVIDING USERS WITH FUNCTIONS PROVIDED ON NETWORK**

(30) Priority: 28.05.2003 JP 2003150545; 03.07.2003 JP 2003190785; 25.12.2003 JP 2003430127; 12.03.2004 JP 2004071416
(71) Applicant: SHARP KABUSHIKI KAISHA, Osaka-shi, Osaka 545-8522 (JP)
(72) Inventor: HIRATA, Masafumi, Chiba 272-0106 (JP); MATSUYAMA, Tetsuya, Ichikawa-shi, Chiba 272-0133 (JP); KUMATANI, Keiji, Hashimoto-shi, Wakayama 6480088 (JP); OTOKAWA, Hideyuki, Yoshino-gun, Nara 6380831 (JP); NITTA, Soichi, Kashihara-shi, Nara 6340803 (JP)
(74) Representative: Müller - Hoffmann & Partner
(86) International application number: PCT/JP2004/005584
(87) International publication number: WO 2004/107194

(57) **Abstract**

When a service utilization terminal such as a mobile telephone accepts a user's input to execute an application, it utilizes a function required for the application via a connector specifying the function required for the application. In this case, the service utilization terminal requests a connector provision server for the connector and obtains it. Only a service utilization terminal holding the connector can access the service provision server described in the connector so that the function required for executing the application can be utilized with a high level of usability and a high level of safty.

## Description

### Technical Field

The present invention relates to a service utilization terminal, a mobile telephone terminal, a television receiver terminal, a connector provision server and a data structure of connector data, and particularly to a service utilization terminal, a mobile telephone terminal, a television receiver terminal, a connector provision server and a data structure of connector data which can conveniently and safely provide functions provided on networks, i.e., so-called Web services to users.

### Background Art

Owing to recent improvement of functionality of terminal devices (which will be referred to merely as "terminals" hereinafter) such as a mobile telephone, many functions can be incorporated into the terminal for executing complicated processing by the terminal alone. However, storage capacities and processing speeds of the terminals are still limited, and it is difficult to perform complicated processing with a large quantity of data by the terminal alone.

According to widespread use of the Internet in recent years, it is now possible to utilize various services on the network by using personal computers or mobile telephones. These services include various kinds of services such as simple services for browsing web pages as well as complicated services for utilizing functions provided by server computers which are present on the network and have large storage capacities and fast processing speeds. Particularly, the latter framework of utilizing the functions present on the network is referred to as a "Web service", and is spreading remarkably rapidly.

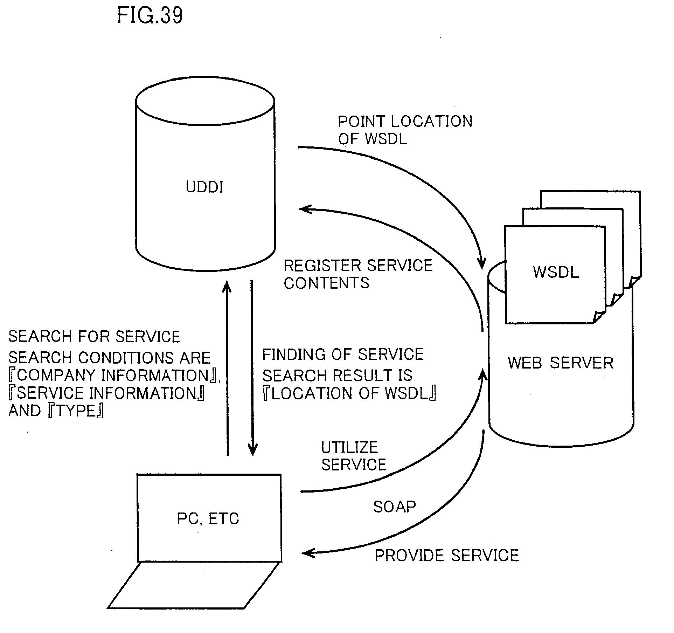

The Web service has been described, e.g., in "Minute Explanation of Web Service Construction" by Toshiya Moto, SoftBank Publishing Co., Ltd., April 2003, 1st edition, pp. 2 - 16. As illustrated in Fig. 39, the Web service is a designation for frameworks utilizing functions distributed between various servers and terminals based on international standard technologies of SOAP (Simple Object Access Protocol), which is a protocol defining a manner of data transfer for performing RPC (Remote Procedure Call) between a terminal such as a personal computer (PC) and a server (Web Server), WSDL (Web Service Description Language) defining input/output of functions provided by servers and UDDI (Universal Description, Discovery and Integration) defined for retrieving functions of a server present on a network.

Japanese Patent Laying-Open No. 2003-101589 has disclosed a network service provision system as manners of providing and utilizing services such as Web services over a network. Japanese Patent Laying-Open No. 2003-101589 has disclosed a network service provision system which uses a mobile telephone as a remote control, and thereby allows use utilization of all services on the network via the mobile telephone.

However, the above system disclosed in the Japanese Patent Laying-Open No. 2003-101589 suffers from a problem that the functions, which are present outside the terminal on the network, can be uniquely handled, but functions inside the terminal cannot be handled in the same form.

In the general Wed service disclosed, e.g., in the foregoing reference "Minute Explanation of Web Service Construction", it is impossible to set the functions which are present outside and inside the terminal, and can be utilized by a specific application inside the terminal. This results in a problem. Thus, it is impossible to impose limitations so that only an application provided by a corporation A can utilize a function which is present outside the terminal and is provided by the corporation A.

Further, all the services present on the network can be utilized from the terminal, which results in a problem that it is possible to connect to and utilize a service and/or a function containing a problem in security. For example, such a problem is present that it is impossible to inhibit access to a service which may destroy data in the terminal, and thus to allow utilization of only services and functions approved as being safety from the terminal.

Further, in a conventional application, a user interface of an application is not separated from a function of connecting to a service outside the terminal and a function inside the terminal. This results in a problem that a plurality of different services can be selectively used through the same interface.

The present invention has been developed for overcoming the above problems, and it is an object of the invention to provide a service utilization terminal, a mobile telephone, a television receiver terminal, a connector provision server and a data structure of connector data which can provide Web services of high convenience and safety.

### Disclosure of the Invention

For achieving the above object, a service utilization terminal according to an aspect of the invention includes a connector obtaining unit referring to a description of an application, and obtaining a connector being information for specifying a function required for executing the application, and a function utilizing unit accessing a location of the function described in the connector based on access information relating to the location, and utilizing the function specified by the connector.

According to another aspect of the invention, a mobile telephone terminal includes the foregoing service utilization terminal.

According to further another aspect of the invention, a television receiver terminal includes the foregoing service utilization terminal.

According to further another aspect of the invention, a connector provision server includes a connector storing unit storing a connector being information specifying a function required for executing an application, and including access information for a location of the function, a connector managing unit managing the connector stored in the connector storing unit, and a connector transmitting unit receiving a request for the connector from a service utilization terminal, and transmitting the required connector to the service utilization terminal.

According to a further aspect of the invention, a data structure of connector data is information stored in storing means of a service utilization terminal for causing the service utilization terminal to specify a function required for executing an application in the service utilization terminal, is information specified by a description of the application, and includes identifying information of the connector data for specifying the connector data with reference to the description of the application; access information for accessing a location of the function by the service utilization terminal; input definition information defining information to be passed to the function by the service utilization terminal accessing the location according to the access information; and output definition information defining information to be received from the function by the service utilization terminal with respect to the information passed to the function.

### Brief Description of the Drawings

Fig. 1 illustrates a specific example of a structure of a service provision system according to an embodiment.
Figs. 2 and 3 illustrate specific examples of a hardware structure and a function structure of a service utilization terminal 100 according to the embodiment.
Fig. 4 illustrates a specific example of a structure of an application managing unit 110.
Figs. 5 and 36 illustrate specific examples of application data 310, respectively.
Fig. 6 illustrates specific examples of an application name 401, an application identifier 402, an expiration date 403 and a maximum utilization number 404 in application data 310.
Figs. 7, 29 and 31 illustrate specific examples of an application 405, respectively.
Fig. 8 illustrates a specific example of a structure of a connector managing unit 120 in service utilization terminal 100.
Figs. 9, 33, 37 and 43 illustrate specific examples of connector data 710, respectively.
Figs. 10 and .11 illustrate specific examples of a connector name 801, a connector identifier 802, an expiration date 803 and a maximum utilization number 804 in connector data 710.
Figs. 12 and 13 illustrate specific examples of input/output definitions 805a and 805b.
Fig. 14 illustrates a specific example of an external function managing unit 130.
Fig. 15 illustrates a specific example of an internal function managing unit 140.
Fig. 16 illustrates a specific example of a structure of a simplified service provision system.
Fig. 17 is a flowchart illustrating processing performed for executing an application in a service utilization terminal 1301.
Fig. 18 illustrates a specific example of an input screen.
Fig. 19 is a flowchart illustrating processing of utilizing a function outside a terminal in a step S109.
Figs. 20, 21, 23 - 27, 30, 32, 34, 57, 58, 60 and 61 illustrate specific examples of screens, respectively.
Fig. 22 is a flowchart illustrating processing of utilizing a function inside the terminal in a step S110.
Fig. 28 schematically illustrates service utilization processing executed by the service utilization terminal according to the invention.
Fig. 35 illustrates a specific example of a simplified structure of a service provision system according to a fourth modification.
Fig. 38 is a flowchart illustrating processing of utilizing the function outside the terminal in the fourth modification.
Fig. 39 illustrates a specific example of a structure of a general Web service in a prior art.
Figs. 40 and 41 illustrate specific examples of a hardware structure and a function structure of a connector provision server 280 of the embodiment.
Fig. 42 illustrates a specific example of a structure of a connector managing unit 520 in connector provision server 280.
Fig. 44 is a flowchart illustrating connector receiving processing in connector provision server 280.
Fig. 45 illustrates a specific example of a service provision server information table.
Fig. 46 illustrates a specific example of an application 405.
Fig. 47 is a flowchart illustrating connector transmitting processing in a connector provision server 1307.
Figs. 48 and 50 illustrate some other specific examples of specified structures of the service provision system.
Figs. 49 and 51 illustrate specific examples of an input/output definition.
Fig. 52 is a flowchart illustrating service relaying processing in connector provision server 1307 of a fifth modification.
Fig. 53 illustrates a specific example of an application 405 of a sixth modification.
Fig. 54 illustrates a specific example of an input screen.
Fig. 55 illustrates a specific example of the input screen after input of information.
Figs. 56 and 59 illustrate specific examples of application 405 of a seventh modification.
Fig. 62 illustrates specific examples of methods of storing and managing connector data according to an eighth modification.
Fig. 63 illustrates a specific example of a structure of a terminal 6300 according to a ninth embodiment.
Fig. 64 illustrates a detailed specific example of a divination application 6310.
Figs. 65 and 68 illustrate processing in the case of utilizing a divination Web service 6340 from a divination application 6310 and the case of utilizing a divination Web service 2 (6350) from a divination application 2 (6330).
Figs. 66 and 69 illustrate specific examples of a part of connector data 6320 and connector data 2 (6330) in the case of describing conversion rules 1 - 3 in XML.
Fig. 67 illustrates a specific example of a structure of a terminal 6300 in the case of utilizing a plurality of different Web services from one application.
Figs. 70 and 71 illustrate specific examples of a method of changing a connection destination of Web services 6340 and 6350 utilized from application 6310.

### Best Modes for Carrying Out the Invention

Embodiments of the invention will now be described with reference to the drawings. In the following description, the same parts and components bear the same reference numbers and the same names, and achieve the same functions. Therefore, description thereof is not repeated.

A service provision system of an embodiment includes a service utilization terminal according to the invention and a service provision server providing a function to the service utilization terminal.

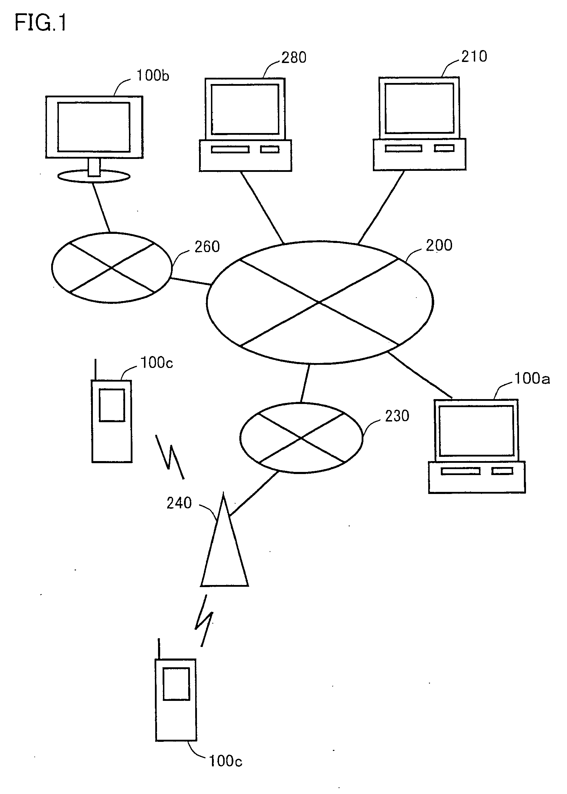

Referring to Fig. 1, a service utilization personal computer 100a, which is a service utilization terminal in this embodiment (and may be referred to as a "PC" hereinafter), is connected to a service provision server 210 providing functions to the service utilization terminals over a network 200.

Network 200 is further connected to a mobile telephone network 230, a home network 260 and a connector provision server 280. A service utilization television 100b, which is a service utilization terminal in this embodiment, is connected to service provision server 210 via so-called home network 260 and network 200.

Mobile telephone network 230 connected to network 200 is also connected to a mobile telephone base station 240. A service utilization mobile telephone 100c, which is a service utilization terminal in this embodiment, is connected to service provision server 210 via mobile telephone base station 240, mobile telephone network 230 and network 200.

In this embodiment, it is assumed that service utilization terminals are specifically service utilization personal computer 100a, service utilization television 100b and service utilization mobile telephone 100c which access service provision server 210 over network 200 to utilize functions provided by service provision server 210. These are collectively referred to as service utilization terminals 100. However, the service utilization terminals of the invention are not restricted to these devices, and may be other terminals which can utilize the functions provided by service provision server 210 over the network.

For example, personal digital electronics devices such as PDAs (Personal Digital Assistants), PVRs (Personal Vide Recorders) including a video recorder, a DVD (Digital Video Disc) recorder, a hard disc video recorder, a digital broadcast tuner and a home server as well as so-called white goods such as a refrigerator, a washer and a microwave oven can be deemed as the service utilization terminals according to the invention provided that the devices can utilize a network service.

Service provision server 210 is a server providing the function which can be utilized from service utilization terminal 100. The services provided by service provision server 210 to service utilization terminal 100 correspond to functions including applications, and specifically correspond to applications such as programs as well as functions (a character display function, a character decorating function, an image obtaining function, an animation producing function and others) which are required for executing applications in service utilization terminal 100.

Connector provision server 280 is a server providing to service utilization terminal 100 a connector which is required for utilizing the function provided by service provision server 210 from service utilization terminal 100. The connector provided from connector provision server 280 to service utilization terminal 100 is information for specifying a function which is required for executing the application in service utilization terminal 100. Specific examples of the connector will be described later.

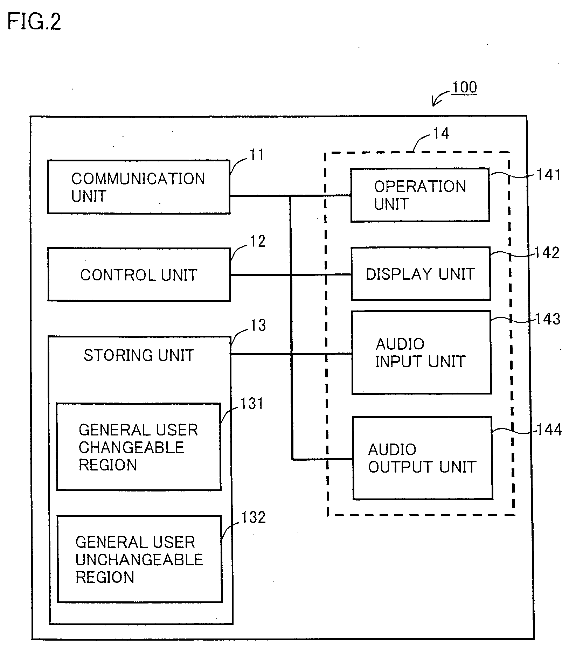

Referring to Fig. 2, service utilization terminal 100 according to the embodiment is formed of a CPU (Central Processing Unit) and others, and includes a control unit 12 entirely controlling service utilization terminal 100, a communication unit 11 for communication with another device and a storing unit 13 which is formed of a ROM (Read Only Memory) and a RAM (Random Access Memory), and stores programs to be executed by control unit 12, intermediate data of the stored programs, data received from another computers and others.

Foregoing input/output unit 14 includes an operation unit 141 including numeric buttons of "1", "2" and others as well as direction buttons of "R", "L" and others, a display unit 142 such as an LCD (Liquid Crystal Display) displaying information for the user, an audio input unit 143 such as a microphone for taking in a sound and an audio output unit 144 such as a loud speaker for outputting a sound.

Storing unit 13 includes a general user changeable region 131 in which stored contents can be changed by an operation of a general user, and a general user unchangeable region 132 in which stored contents cannot be changed by the operation of the general user. General user unchangeable region 132 primarily stores data which must not be changed by the general user, and more specifically stores data such as telephone numbers used in the case where service utilization terminal 100 is a mobile telephone, an identifier unique to service utilization terminal 100 and an address of the server for obtaining applications and connectors to be described alter. However, means may be employed so that a service provider and a terminal maintenance operator, who may be authorized to change data stored in general user unchangeable region 132, can add, delete and/or change data to or in general user unchangeable region 132, and/or programs or the like can perform such addition, deletion and/or changing.

The hardware structure illustrated in Fig. 2 is a hardware structure of a general mobile telephone, and the hardware structure of service utilization terminal 100 according to the invention is not restricted to the hardware structure illustrated in Fig. 2.

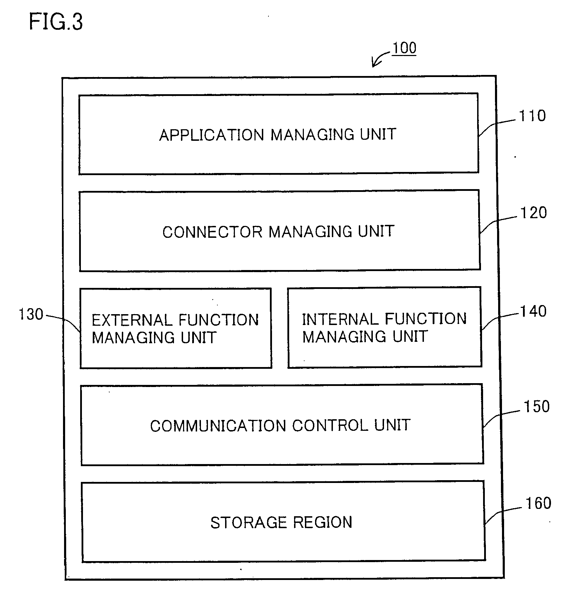

Referring to Fig. 3, service utilization terminal 100 according to the embodiment includes an application managing unit 110, a connector managing unit 120, an external function managing unit 130, an internal function managing unit 140, a communication control unit 150 and a storage region 160. Functions of these units are achieved by control unit 12 which reads and executes programs stored in storing unit 13 to control various units and portions in the hardware structure illustrated in Fig. 2.

Storage region 160 includes general user unchangeable region 132 in storing unit 13, and stores access information (address) for service provision server 210, access information (address) for connector provision server 280, identification information of service utilization terminal 100 and others as already described.

Application managing unit 110 analyzes application data to determine a required connector when an application is to be executed in service utilization terminal 100. It requests connector managing unit 120 to provide the connector. Application managing unit 110 will be described later in greater detail.

Connector managing unit 120 obtains the connector requested by application managing unit 110. When service utilization terminal 100 does not include the requested connector, connector managing unit 120 reads access information for accessing connector provision server 280 from storage region 160, and obtains the requested connector by accessing connector provision server 280 according to the access information thus read. Descriptions in the application may contain the above access information for accessing connector provision server 280. Communication control unit 150 controls communication between service utilization terminal 100 and connector provision server 280 in the above case.

Connector managing unit 120 analyzes the connector data thus obtained to determine the function, which is required for executing the application, and the location thereof. When the required function is present in service provision server 210, i.e., when the required function can be provided by service provision server 210, connector managing unit 120 requests external function managing unit 130 to provide the function in question. When the required function is included in service utilization terminal 100, connector managing unit 120 requests internal function managing unit 140 to provide the function. Connector managing unit 120 will be described later in greater detail.

External function managing unit 130 reads the access information for service provision server 210 from storage region 160, and access service provision server 210 according to the access information thus read. It utilizes the function requested by connector managing unit 120. Communication control unit 150 controls the communication between service utilization terminal 100 and service provision server 210 in the above case.

Internal function managing unit 140 utilizes the function included in service utilization terminal 100, and particularly the function requested by connector managing unit 120.

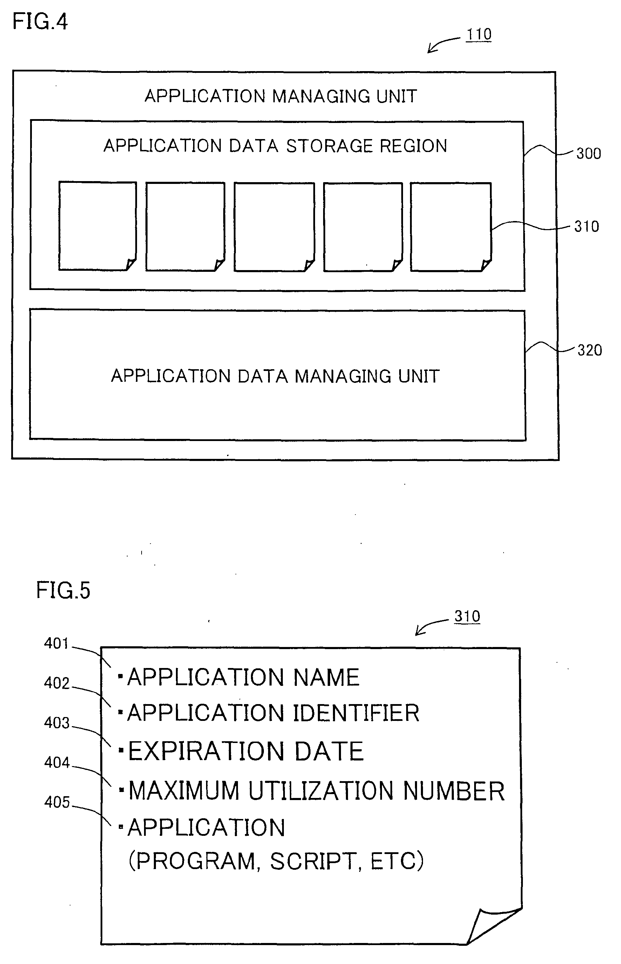

Referring to Fig. 4, application managing unit 110 includes an application data storage region 300 and an application data managing unit 320.

Application data storage region 300 stores application data 310. Application data 310 may be programs which can be executed by a computer, and/or may be script files which can be interpreted and executed by a script interpreting device.

Application data managing unit 320 manages operations of application data storage region 300 such as addition of application data 310, deletion thereof and downloading thereof over the network as well as operations of application data 310 such as execution and stop of the applications.

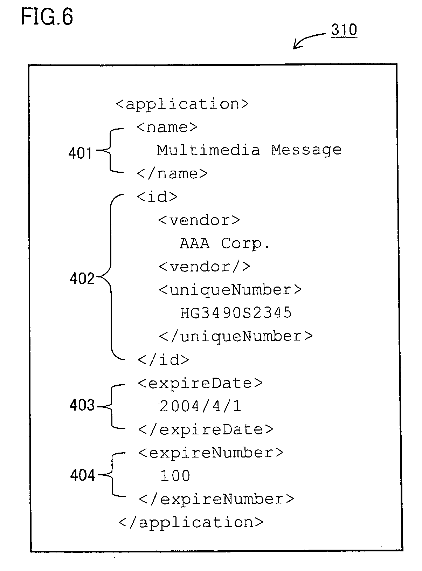

Referring to Fig. 5, application data 310 includes an application name 401, an application identifier 402 which is information unique to the application, an expiration date 403 representing a date on or before which the application can be executed, a maximum utilization number 404 which represents the number of allowed operations of executing the application, and an application 405. Application 405 may be executable programs, and may also be script files which are interpreted and executed by the script interpreting device.

In a specific example shown in Fig. 6, application name 401 is "Multimedia Message". Application identifier 402 is set that vendor is "AAA Coop." and a uniquely assigned number is "HG3490S2345". Expiration date 403 is valid until "April 1, 2004". Maximum utilization number 404 is "100".

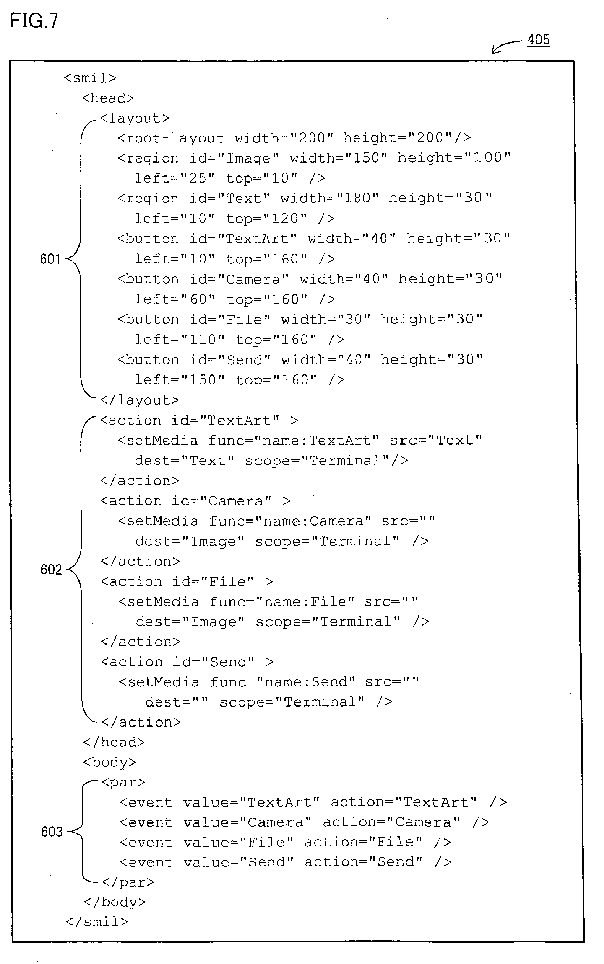

Fig. 7 illustrates a specific example in the case where application 405 is described with expanded SMIL (Synchronized Multimedia Integration Language). However, application 405 may be described in another format.

Referring to Fig. 7, a description 601 sets screen display of the application, and more specifically sets display in an image region of "width of 150, height of 100, left margin of 25 and top margin of 10", similar display in a text region, display of a Text Art button with "width of 40, height of 30, left margin of 10 and top margin of 160", similar display of a Camera button, similar display of a File button and similar display of a Send button.

A description 602 sets operations of actions, and more specifically sets an operation of an action named "TextArt", in which "a connector named "TextArt" is searched for with a search range of "Terminal (inside service utilization terminal 100"), and is utilized to pass a value of a Text region to a corresponding function, and a result received from the function is displayed in the Text region", an operation of an action named "Camera", in which "a connector named "Camera" is searched for with a search range of "Terminal" and is utilized, it is not necessary to pass the value to the corresponding function, and a result received from the corresponding function is displayed in an Image region, an operation of an action named "File", in which "a connector named "File" is searched for with a search range of "Terminal" and is utilized, it is not necessary to pass the value to the corresponding function, and a result received from the corresponding function is displayed in the Image region, and an operation of an action named "Send", in which "a connector named "Send" is searched for with a search range of "Send" and is used, it is not necessary to pass the value to the corresponding function, and a result received from the corresponding function does not update a display screen. Although not shown in Fig. 7, the search range of the connector may be connector provision server 280, or may be service utilization terminal 100 and connector provision server 280 ("Server"), in which case description 602 contains a description to that effect.

A description 603 describes an operation to be performed when a button is depressed, and more specifically describes operations in the cases where a TextArt button that "an action named "TextArt" is executed" is depressed, where a Camera button that "an action named "Camera" is executed" is depressed, a File button that "an action named "File" is executed" is depressed, and a Send button that "an action named "Send" is executed" is depressed.

When service utilization terminal 100 executes application 405 illustrated in Fig. 7, screen display is performed as will be specifically described later.

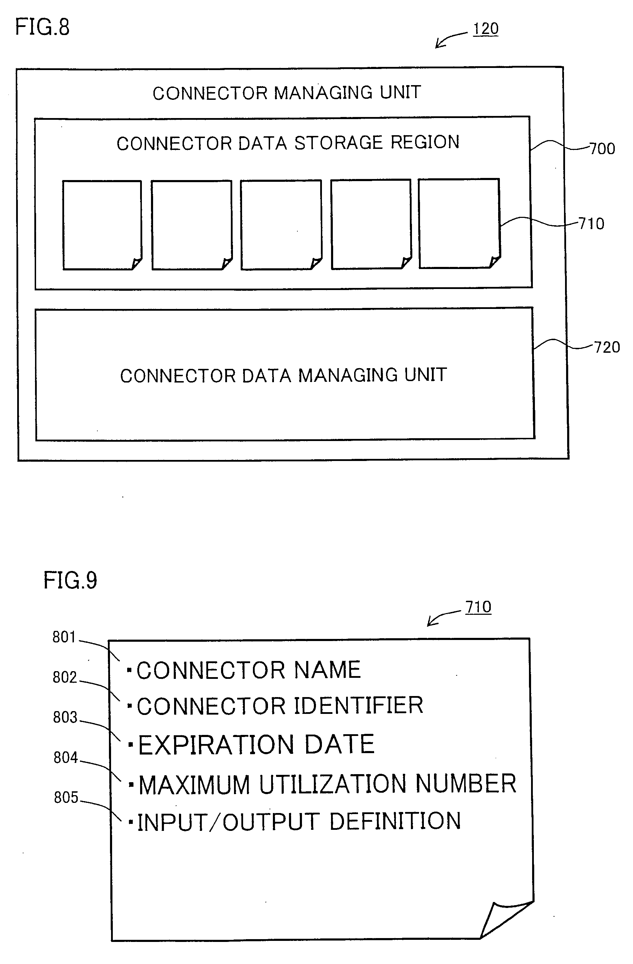

Referring to Fig. 8, connector managing unit 120 includes a connector data storage region 700 and a connector data managing unit 720.

Connector data storage region 700 stores connector data 710.

Connector data managing unit 720 manages connector data storage region 700, e.g., by adding or deleting connector data 710 or downloading it over the network. According to description details of connector data 710, the functions of external and internal function managing units 130 and 140 are utilized.

Referring to Fig. 9, connector data 710 includes a connector name 801 which is information of the connector itself, a connector identifier 802 which is information unique to the connector, an expiration date 803 representing a usable period of the connector, a maximum utilization number 804 representing the number of allowed operations of utilizing the connector, and an input/output definition 805 defining passing of the data to/from the function defined by the connector.

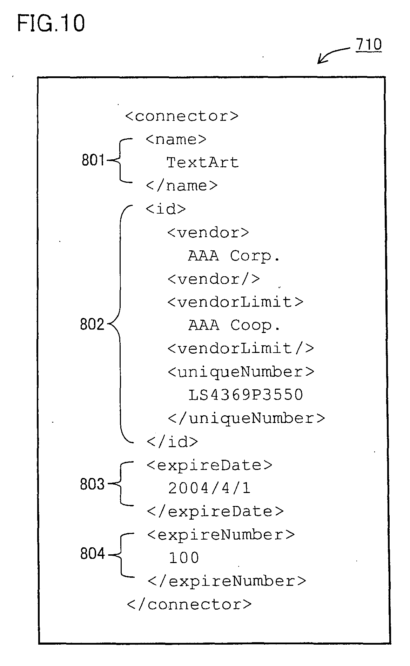

In a specific example illustrated in Fig. 10, connector name 801 is "TextArt". Connector identifier 802 is set such that vendor is "AAA Coop.", the vendor of the application allowed to use this connector is "AAA Coop." and a uniquely assigned number is "LS4369P3550". Expiration date 803 is "valid until April 1, 2004". Maximum utilization number 804 is "100".

Connector data 710 illustrated in Fig. 10 has a feature that connector identifier 802 sets a vendor of the application capable of utilizing the connector in question, and thereby restricts the application which can utilize the connector in question.

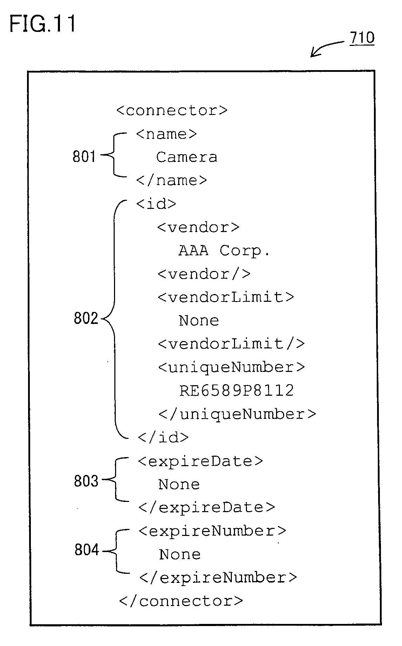

Referring to Fig. 11, connector name 801 is "Camera". Connector identifier 802 is set such that the vendor is "AAA Coop.", the vendor of the application allowed to use the connector is not designated (i.e., any application can utilize the connector), and the uniquely assigned number is "RE6589P8112". Expiration date 803 is "not designated (always utilizable)". Maximum utilization number 804 is "not designated (utilizable infinitely)"

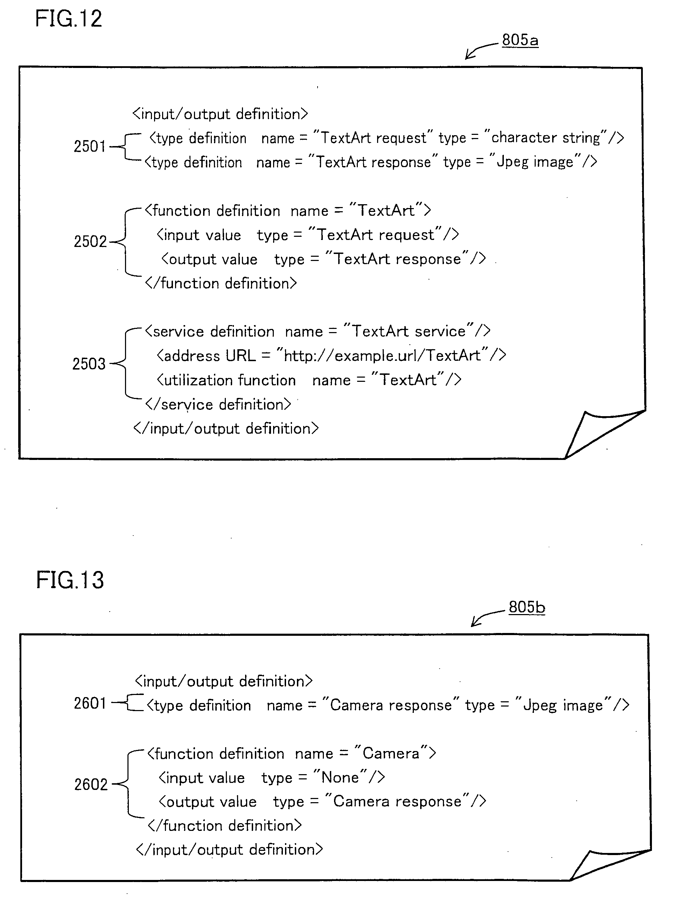

An input/output definition 805a in a specific example illustrated in Fig. 12 defines functions included in devices other than service utilization terminal 100 in question when this service utilization terminal 100 executes the application, and thus defines the passing of data with respect to the function provided by service provision server 210 for utilizing this function. Referring to Fig. 12, a description 2501 defines a type of data utilized by the function in question, and specifically defines data, which is of a type of a character string and is named "TextArt request", and data which is of a type of a Jpeg image and is named "TextArt response".

A description 2502 defines the name of the function as well as types of input data received by the function and output data returned by the function. More specifically, it defines that the name of the function is "TextArt", data of the type named "TextArt request" is received and data of the type named "TextArt response" is returned as the output value.

A description 2503 defines a name at the time when the function is provided, access information for a location of the function and the function utilizable at the location, and specifically defines that the name of service is "TextArt service", the address of service provision server 210, i.e., the location of the function is "http://example.url/TextArt" and the utilizable function is "TextArt".

An input/output definition 805a includes foregoing descriptions 2501 - 2503 so that connector data managing unit 720 of service utilization terminal 100 accesses service provision server 210 at address "http://example.url/TextArt", and passes the data of the type "TextArt request" to function TextArt included in service provision server 210. Thereby, it can recognize that the data of the TextArt response type can be obtained.

Input/output definition 805a is not restricted to the definition including the above descriptions, and may include descriptions using a format of WSDL (Web Service Description Language) for the input/output definition of the Web service which is generally and frequently used. The access information is not restricted to the format indicated by URL, and may be of another format provided that it is an URI (Uniform Resource Identifier) which is information relating to the access to service provision server 210.

An input/output definition 805b in a specific example illustrated in Fig. 13 defines passing of the data for the function included in service utilization terminal 100 for utilizing the function when service utilization terminal 100 executes the application. More specifically, a description 2601 defines a format of the data utilized in the function in question, and more specifically defines data which is named "Camera response" and is of a format of the Jpeg image.

A description 2602 defines the name of the function as well as types of input data received by the function and output data returned by the function, and more specifically sets that the name of the function is Camera", an input value is "Null" meaning that the input value is not received, and data of the type named "Camera response" is returned as the output value.

Input/output definition 805b illustrated in Fig. 13 does not include description 2503 illustrated in Fig. 12. More specifically, input/output definition 805b illustrated in Fig. 13 includes foregoing descriptions 2601 and 2602, and thereby connector data managing unit 720 of service utilization terminal 100 can recognize from the Camera function included in service utilization terminal 100 that the data of the Camera response type can be obtained. Naturally, input/output definition 805b for utilizing the function included in service utilization terminal 100 may include description 2503 defining a name at the time of provision of the function, access information for the location of the function and the function utilizable at the location, similarly to input/output definition 805a illustrated in Fig. 12. In this case, it is preferable that a description, e.g., of "Local" indicating the access to service utilization terminal 100 itself is present as the access information for the location of the function included in description 2503.

Input/output definition 805b defining passing of the data to and from the function included in service utilization terminal 100 is not restricted to the definition including the foregoing descriptions, and may include descriptions using the format of WSDL for the input/output definition of the Web service which is generally and frequently used.

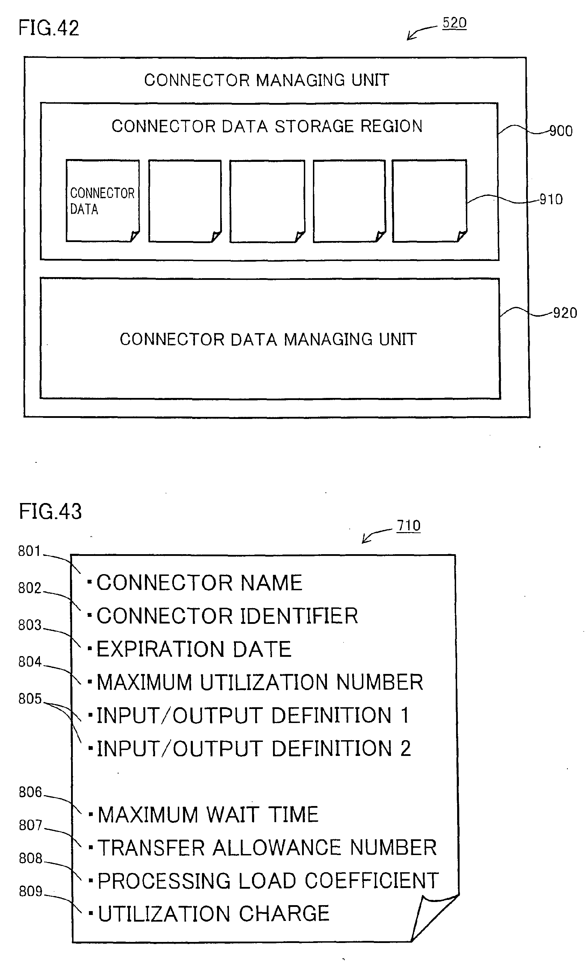

Further, connector data 710 is not restricted to a data structure illustrated in Fig. 9. For example, input/output definition 805 may include a plurality of input/output definitions 1 and 2 as illustrated in Fig. 43. This corresponds to the case where a connector supports different numbers of arguments for functions achieving a similar effect. For example, a connector, which defines a function of executing image combining processing, may support two image inputs, three image inputs and four or more image inputs. When a plurality of definitions 805 are present as illustrated in Fig. 43, one connector can deal with these plurality of input patterns.

Further, as illustrated in Fig. 43, connector data 710 may include a maximum wait time 806, an allowed transfer number 807, a processing load coefficient 808 and a utilization charge 809 in addition to the data structure illustrated in Fig. 9.

Since connector data 710 includes maximum wait time 806 as illustrated in Fig. 43, service utilization terminal 100 can perform exceptional processing for utilizing the function of service utilization terminal 100, which is specified in connector data 710, with reference to maximum wait time 806 included in connector data 710 when service utilization terminal 100 utilizes the above function or when service utilization terminal 100 accesses service provision data 210 on the network, and downloads the function. Maximum wait time 806 included in connector data 710 is only a value for reference purposes, and it actually depends on service utilization terminal 100 or application 405.

Among the connectors, there is a connector(s) of which transfer between the service utilization terminals is allowed only a certain number of times. Allowed transfer number 807 defines the number of allowed transfers. Since connector data 710 includes allowed transfer number 807 as illustrated in Fig. 43, service utilization terminal 100 can determine whether connector data 710 held therein can be transferred or not.

When service utilization terminal 100 utilizes the function of service utilization terminal 100 specified in connector data 710, or when it accesses service provision data 210 on the network and downloads the function, service utilization terminal 100 may have a plurality of connector data specifying the substantially same function, in which case service utilization terminal 100 can utilize the function of any one of the plurality of connector data for executing an application. In this case, since connector data 710 includes processing load coefficient 808 as illustrated in Fig. 43, connector managing unit 120 can automatically select an optimum connector with reference to processing load coefficient 808 which can be indexes of a service processing time and a load required in its own terminal.

In connection with certain kinds of connectors, a user is charged for the service utilization. Since connector data 710 includes utilization charge 809 as illustrated in Fig. 43, service utilization terminal 100 can have the charge information. A user of service utilization terminal 100 can read the charge information relating to the connectors incorporated thereinto, and can utilize the information when determining deletion of unnecessary chargeable information.

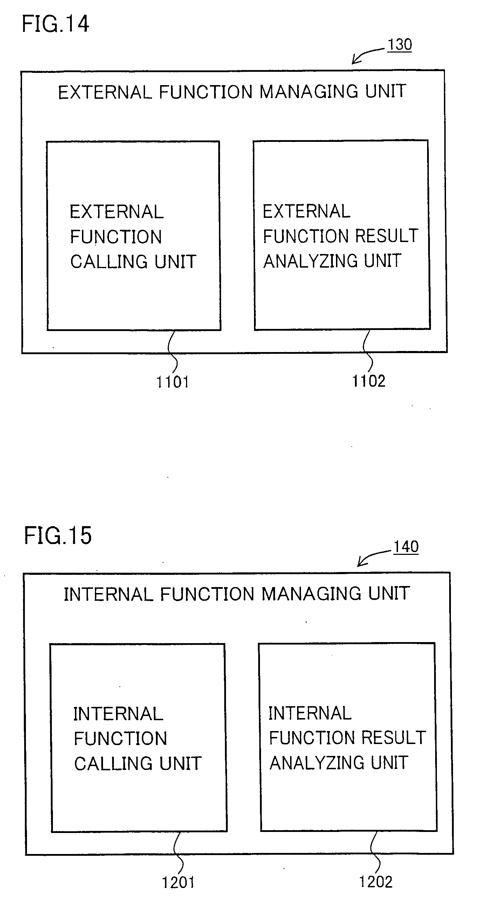

Referring to Fig. 14, external function managing unit 130 is formed of an external function calling unit 1101 and an external function result analyzing unit 1102.

External function calling unit 1101 calls by RPC (Remote Procedure Call) another device outside service utilization terminal 100, i.e., a function which is present in service provision server 210 (and will be referred to as an "external function" hereinafter). A general protocol such as SOAP (Simple Object Access Protocol) can be used for calling an external function by RPC.

External function result analyzing unit 1102 analyzes a result obtained by the external function. The result returned by the external function can be received in a format according to a general protocol such as SOAP already described.

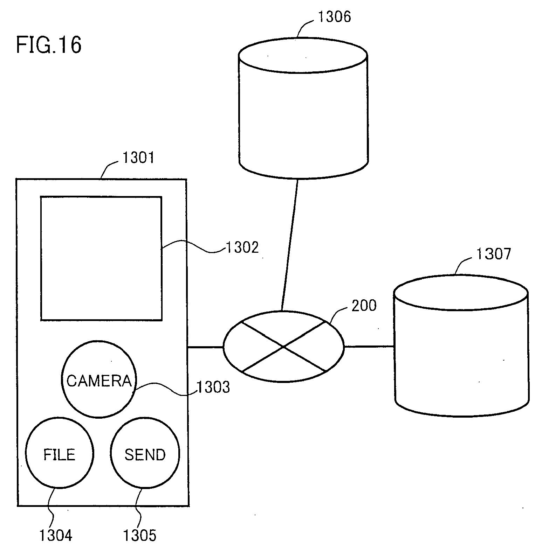

Referring to Fig. 15, internal function managing unit 140 includes an internal function calling unit 1201 and an internal function result analyzing unit 1202.

Internal function calling unit 1201 calls a function held in service utilization terminal 100 (i.e., it accesses a program or data held in service utilization terminal 100). Internal function result analyzing unit 1202 receives a result obtained by executing the function held in service utilization terminal 100, and analyzes the result.

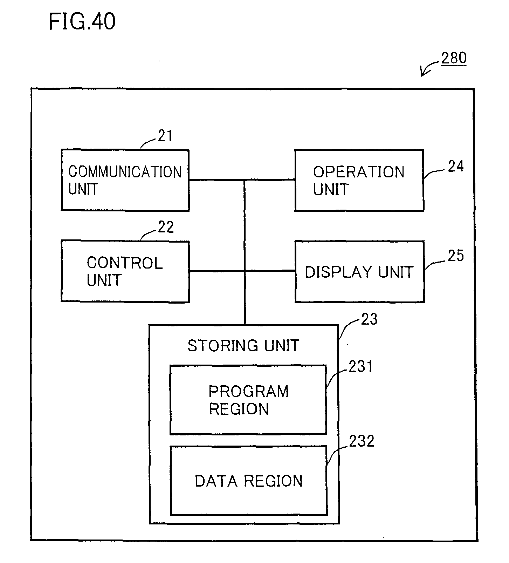

Referring to Fig. 40, connector provision server 280 in this embodiment is formed of devices such as a CPU, and includes a control unit 22 entirely controlling connector provision server 280, a communication unit 21 for communication with another device, a storing unit 23 which is formed of a memory device such as a ROM or RAM, and/or a disc drive such as a HDD for storing programs and various data required for executing the programs, an operation unit 24 formed of a keyboard including keys of various characters "A" - "Z", numerics and symbols for externally entering data into the terminal, and a display unit 25 formed of a display device for displaying various output results and details of operations.

Further, storing unit 23 includes a program storage region 231 for primarily storing fixed data such as programs, a data storage region 232 storing intermediate data of programs and data required for transfer to and from another computer.

A hardware structure illustrated in Fig. 40 is the same as that of a general. personal computer, a work station or the like, and the hardware structure of connector provision server 280 according to the invention is not restricted to the hardware structure illustrated in Fig. 40. For example, operation unit 24 and display unit 25 may be eliminated when connector provision server 280 in this embodiment operates.

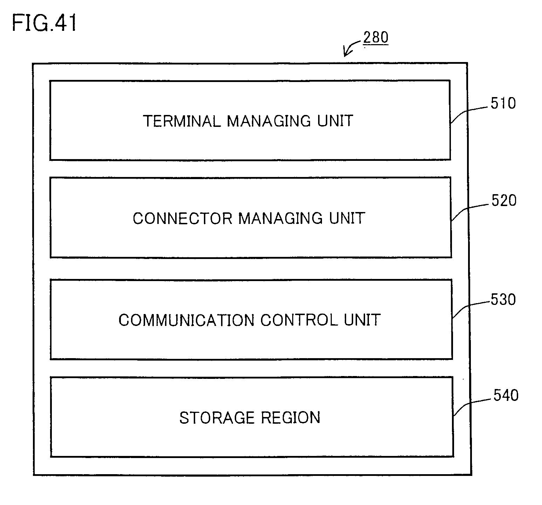

Referring to Fig. 41, connector provision server 280 in this embodiment includes a terminal managing unit 510, a connector managing unit 520, a communication control unit 530 and a storage region 540. Functions of these units are achieved by reading programs stored in program storage region 231 of storing unit 23, and controlling communication unit 21, storing unit 23 and data region 232 of storing unit 23 in Fig. 40 according to the read programs.

Storage region 540 stores various data, and is formed of storing unit 23 illustrated in Fig. 40.

Terminal managing unit 510 manages the terminal information of service utilization terminal 100 when this service utilization terminal 100 requests connector provision server 280 to provide the connector. More specifically, terminal managing unit 510 stores identification information and others, which can be used for uniquely identifying service utilization terminal 100 currently establishing a connection, and requests communication control unit 530 based on the identification information to achieve transfer or passing to and from an arbitrary service utilization terminal.

Connector managing unit 520 manages the connectors which can be provided by connector provision server 280. After determining, confirming and extracting the required connector according to the request provided from service utilization terminal 100, connector managing unit 520 transmits the necessary connector to communication control unit 530 including communication unit 21 and control unit 22.

Referring to Fig. 42, connector managing unit 520 includes a connector data storage region 900 and a connector data managing unit 920.

Connector data storage region 900 stores connector data 910 which is substance of the connector to be provided in service utilization terminal 100.

Connector data managing unit 920 performs addition, deletion, search and read of or for connector data 910. When connector provision server 280 in this embodiment receives a request for a connector from service utilization terminal 100, connector data managing unit 920 searches connector data storage region 900 to extract the connector in question. When connector data 910 in question is found, connector data managing unit 920 reads items required for foregoing connector data 910, further edits the data of connector data 910 if necessary, and requests communication control unit 530 to transmit connector data 910 to service utilization terminal 100 in question.

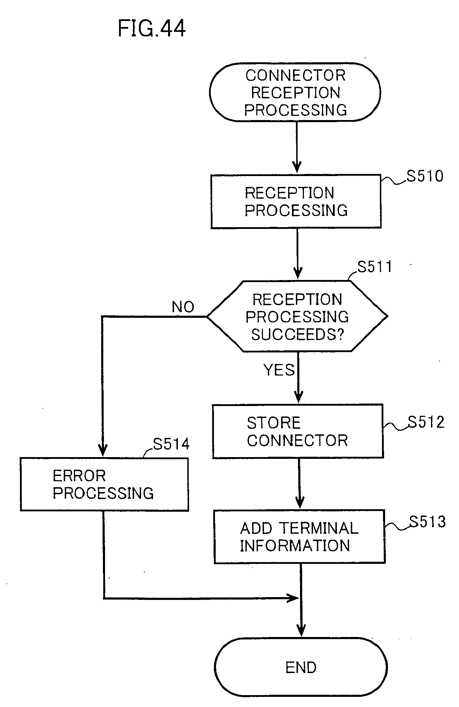

Connector provision server 280 obtains the connector from service provision server 210 connected over network 200, and stores it in connector data storage region 900. In this operation, connector provision server 280 performs the connector receiving processing, which will now be described with reference to a flowchart of Fig. 44.

Referring to Fig. 44, connector provision server 280 receives connector data 910 transmitted from service provision server 210 in step S510.

After the reception is completed in step S510, it is determined in step S511 whether the reception is completed correctly or not. When the reception is correctly completed (YES in S511), the process proceeds to step S512. Thus, received connector data 910 is stored in connector data storage region 900 when the reception is correctly completed. Then, the process proceeds to step S513.

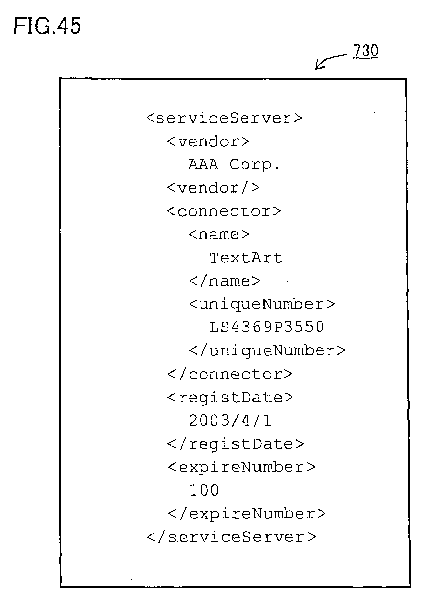

In step S513, connector provision server 280 stores various items of information of service provision server 210, which is a vendor of connector data 910, in connector data managing unit 920 as a service provision server information table. Fig. 45 illustrates a specific example of the service provision server information table stored in connector data managing unit 920 in step S513. Referring to Fig. 45, the service provision server information table represents that a corporation "AAA Corp." obtained connector data named "TextArt" with ID "LS4369P3550". The date of obtaining is April 1, 2003, and this connector provision server 280 can further distribute this connector data 100 times.

When addition of information to service provision server 210 is completed in step S513, the communication between service provision server 210 and connector provision server 280 ends, and at the same time, the connector receiving processing ends.

When the reception of connector data abnormally ends in step S511 (NO in S511), error processing is executed in step S514, e.g., by erasing the received data and notifying service provision server 210 of a reception failure, and the connector receiving processing ends.

By executing the connector data receiving processing described above, connector provision server 280 holds in connector data managing unit 920 the connector data allowing access to the service provided by service provision server 580.

In this embodiment, the connector is transferred by direct communication from service provision server 210 to connector provision server 280. However, this is merely a specific example, and another manner may be employed, e.g., to transfer the connector by using an external memory medium such as a CD-ROM (Compact Disc ROM) or a memory card without using communication. The vendor of the connector is not restricted to service provision server 210, and may be another device which produced the connector to be provided, but is not illustrated in Fig. 1. Connector data 910 has substantially the same structure as connector data 710 of which specific examples are illustrated in Figs. 9-13 and 43.

When service utilization terminal 100 of the embodiment executes the application included in this service utilization terminal 100, the functions outside and inside service utilization terminal 100 can be utilized via the connectors as described below. In the following description, it is assumed for the sake of illustration, that the service provision system illustrated in Fig. 1 has a simplified structure as illustrated in Fig. 16. Referring to Fig. 16, a service utilization terminal 1301 in this specific example includes a display 1302 displaying a screen as well as a Camera function 1303, a File function 1304 and a Send function 1305 serving as functions inside service utilization terminal 1301. Service utilization terminal 1301 is connected to a connector provision server 1307 via network 200, and obtains a connector provided by connector provision server 1307. Service utilization terminal 1301 is connected to a service provision server 1306 via network 200, and utilizes a TextArt function which is a function outside service utilization terminal 1301 and is provided by service provision server 1306.

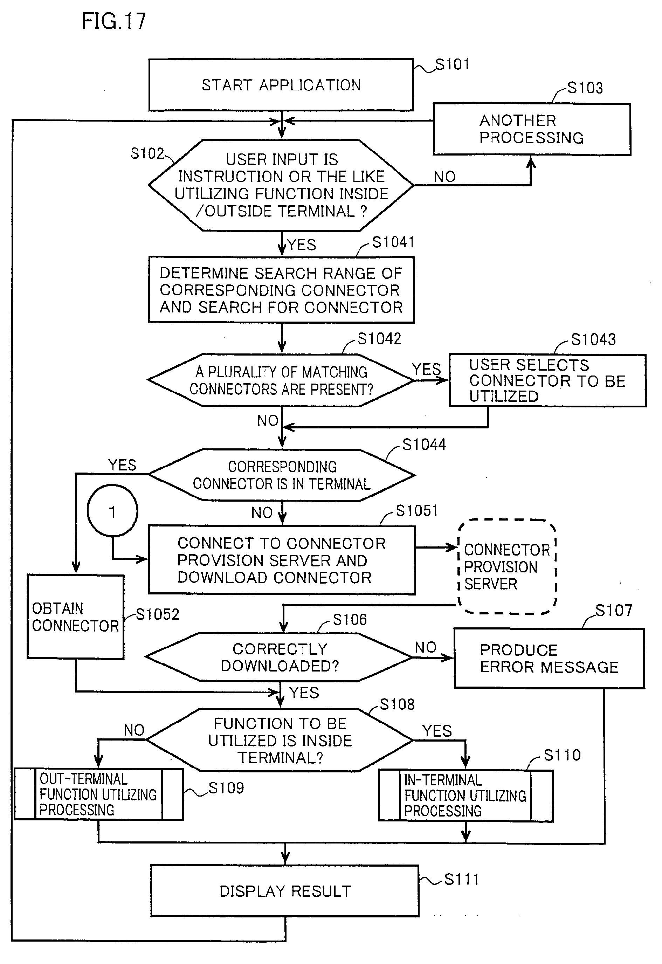

Processing illustrated in a flowchart of Fig. 17 is achieved by controlling various units and portions illustrated in Fig. 3, and such control is performed by control unit 12 reading the programs stored in storing unit 13 when service utilization terminal 1301 executes the application. In the following specific description, it is assumed that application data 310 in Fig. 6 and application 405 in Fig. 7 are executed.

Referring to Fig. 17, an application first starts in step S101. At this point in time, application data managing unit 320 may analyze application data 310 to determine whether the application can be executed or not, based on descriptions such as its expiration date and maximum utilization number.

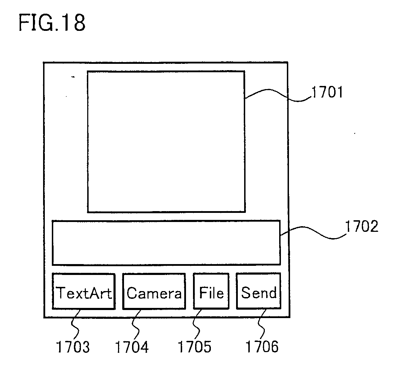

In next step S102, display 1302 displays an input screen of which specific example is illustrated in Fig. 18. More specifically, control unit 12 executes in step S102 the screen display set by description 601 of application 405 illustrated in Fig. 7.

Referring to Fig. 18, the input screen displayed on display 1302 in step S102 includes an Image region 1701 displaying an image, a Text region 1702 displaying characters, a TextArt button 1730 for utilizing the TextArt function, a Camera button 1704 for utilizing Camera function 1303, a File button 1705 for utilizing File function 1304 and a Send button 1706 for utilizing Send function 1305. These are displayed at positions determined by description 601 in application 405.

In step S102, service utilization terminal 1301 accepts a user's input via the input screen illustrated in Fig. 18, and details of the input are determined. When it is determined in step S102 that the user's input is an instruction or the like utilizing the function inside or outside service utilization terminal 1301 (YES in S102), the process proceeds to step S1041. Otherwise (NO in S102), the process proceeds to step S103.

The determination in step S 102 may be performed in the following manner. For this determination, application 405 illustrated in Fig. 7 performs analysis to determine whether the use's input corresponds to any one of event elements set in description 603 or not, and whether the event element in question corresponds to each function in the action element set in description 602 or not. More specifically, in the case of application 405 illustrated in Fig. 7, when the user depresses one of buttons 1703 - 1706 illustrated in Fig. 18, it is determined that the function inside and/or outside service utilization terminal 1301 is to be utilized.

When it is determined in step S102 that the details of the user's input utilize neither the function inside service utilization terminal 1301 nor the function outside service utilization terminal 1301, and relate to another function or the like (NO in S102), processing is performed in step S 1 03 to deal with the user's input utilizing no function inside/outside the terminal, and the process returns to step S 102. The above processing is general processing, e.g., unique to the terminal, and is not restricted according to the invention, and this processing does not relate to an essence of the invention.

When it is determined in step S102 that the details of user's input utilize the function inside or outside service utilization terminal 1301 (YES in S102), processing is further performed in step S1041 to determine a range which is searched for a connector corresponding to the function desired by the user, and the determined range is searched for a predetermined connector. Processing in step S1041 is performed based on the description which sets the operation of the function included in active application 405. More specifically, when active application 405 is the same as that illustrated in Fig. 7, a required connector is retrieved from the defined search range with reference to a Scope attribute value of description 602. In this example, since there is a description "scope = "Terminal" ", the connector matching with a condition designated by "func = " "" is searched for inside service utilization terminal 1301. When it is found from the searching in step S1401 that a plurality of connectors match with the designated condition (YES in S1042), it is preferable that display 1302 displays a selection screen (not illustrated), and the user selects the connector to be utilized through input/output unit 14 represented on operation unit 141 in Fig. 1 (S1043).

When it is determined from the search in step S1041 that a connector matching with the designated condition is present in service utilization terminal 1301 (YES in S1044), the process proceeds to step S1052, and the corresponding connector data is obtained from connector data storage region 700 inside service utilization terminal 1301. Then, the process proceeds to step S 108.

When it is determined from the search in step S1041 that a connector matching with the designated condition is not present in service utilization terminal 1301 (NO in S1044), the process proceeds to step S1051. In step S1051, service utilization terminal 1301 is connected to connector provision server 1307 to search for and download the necessary connector, and then the process proceeds to step S106.

In step S106, it is determined whether the connector was correctly downloaded from connector provision server 280 or not. When downloaded correctly (YES in S106), the process proceeds to step S108. When the download ends in failure (NO in S106), the process proceeds to step S107, in which an error message is produced, and the process proceeds to step S111.

In step S108, connector data managing unit 720 analyzes the connector obtained from service utilization terminal 1301 in step S1052 or the connector downloaded from connector provision server 280 in step S1051, and determines whether the function to be used is the function inside service utilization terminal 1301 or the function outside service utilization terminal 1301. For determination in step S108, such a manner may be employed that the determination is performed based on input/output definition 805 of connector data 710. More specifically, when input/output definition 805 of connector data 710 is input/output definition 805a illustrated in Fig. 12, it is determined from the URL, which serves as access information for the function set by description 2503 in step S108, that the function is outside service utilization terminal 1301 (NO in S108). When input/output definition 805 of connector data 710 is input/output definition 805b illustrated in Fig. 12, input/output definition 805b does not include description 2503 setting the URL as the access information for the function. In step S108, therefore, the function is determined as the function inside service utilization terminal 1301 (YES in S108). When input/output definition 805b includes description 2503 setting, e.g., "Local" as the access information for the function, it is determined based on description 2503 in step S108 that the function is the function inside service utilization terminal 1301.

When it is determined in step S108 that the function desired by the user is the function outside service utilization terminal 1301, i.e., it is the function provided by service provision server 1306 (NO in S108), the process proceeds to step S109, in which application managing unit 110 executes the processing of utilizing the function outside the terminal. When the desired function is inside service utilization terminal 1301 (YES in S108), the process proceeds to step S110, in which application managing unit 110 executes the processing of utilizing the function inside the terminal. The processing of utilizing the function outside the terminal in step S109 and the processing of utilizing the function inside the terminal in step S 110 will be described later in connection with subroutines.

When the processing in step S 109 or 110 ends, the process proceeds to step S111. In step S111, contents displayed on display 1302 are updated according to results of the processing in step S109 or S110. Alternatively, display 1302 may display an error message produced in step S107. Thereafter, the process returns to step S102, and the foregoing processing will be repeated.

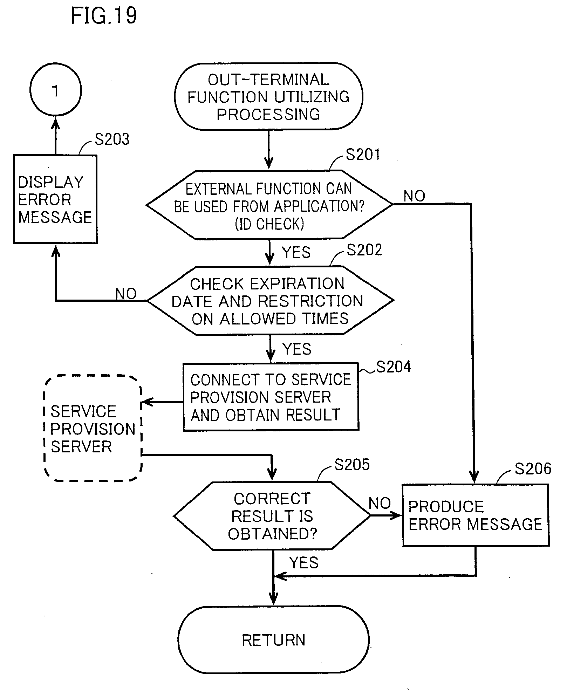

Referring to Fig. 19, when service utilization terminal 1301 utilizes the function outside service utilization terminal 1301, i.e., when it utilizes the function provided by service provision server 1306, application managing unit 110 first performs processing in step S201 to determine from the active application whether the desired or intended function outside service utilization terminal 1301 can be utilized or not The determination in step S201 is performed by comparing the identifier set in the connector with the identifier set in the application. More specifically, connector data 710, of which specific example is illustrated in Fig. 10, has connector identifier 802, in which value "AAA Coop." is set as element "vendorLimit". Application data 310, of which specific example is illustrated in Fig. 6, has application identifier 402, in which value "AAA Coop." is set as element "vendor". In step S201, the value of element "vendor" in connector identifier 802 matches with the value of element "vendor" of application identifier 402. Therefore, application managing unit 110 determines that the application illustrated in Fig. 6 can utilize the function which is located outside the terminal and is set in the connector illustrated in Fig. 10.

As described above, when it is determined in step S201 that the active application can utilize the external function (YES in S201), the process proceeds to step S202. When it is determined that the external function cannot be utilized (NO in S201), the process proceeds to step S206.

In step S202, connector managing unit 120 checks the expiration date of the connector and the maximum utilization number, and determines whether the connector can be still utilized or not. It is assumed that storage region 160 has stored the number of times that the connector to be handled as the target in service utilization terminal 1301 was utilized, and the current date and time can be obtained from service utilization terminal 1301. In step S202, the expiration date and maximum utilization number of the connector can be obtained by referring to the values set in expiration date 803 and maximum utilization number 804 of connector 710 illustrated in Fig. 9.

When it is determined in step S202 that the connector is still valid, and the current number of utilization times is smaller than the maximum utilization number (YES in S202), the process proceeds to step S204. When the connector has expired or the current number of utilization times has reached the maximum utilization number (NO in S202), the process proceeds to step S203.

In step S203, display 1302 displays that the connector cannot be utilized, and the process returns to step S1051 of the main routine for downloading a new connector.

In step S204, a result is obtained by connecting to service provision server 1306. In step S204, external function calling unit 1101 of external function managing unit 130 passes the required data defined in input/output definition 805 to service provision server 1306 connected thereto. Then, external function result analyzing unit 1102 receives the result from service provision server 1306, and passes it to active application 405. Thereafter, processing in step S204 ends, and the process proceeds to step S205.

In step S205, it is determined whether a correct result is obtained from service provision server 1306 or not. This determination is performed, e.g., by determining whether the data obtained from service provision server 1306 is of the type defined by input/output definition 805 or not. In another method, it may be determined from the access information defined by input/output definition 805 whether connection to service provision server 1306 is made or not. When the connection to service provision server 1306 is not made, or when the obtained result is not correct (NO in S205), the process proceeds to step S206, in which an error message is produced to that effect. Then, the subroutine ends, and the process proceeds to the main routine in Fig. 17. When the obtained result is correct (YES in S205), the subroutine ends, and the process proceeds to the main routine in Fig. 17.

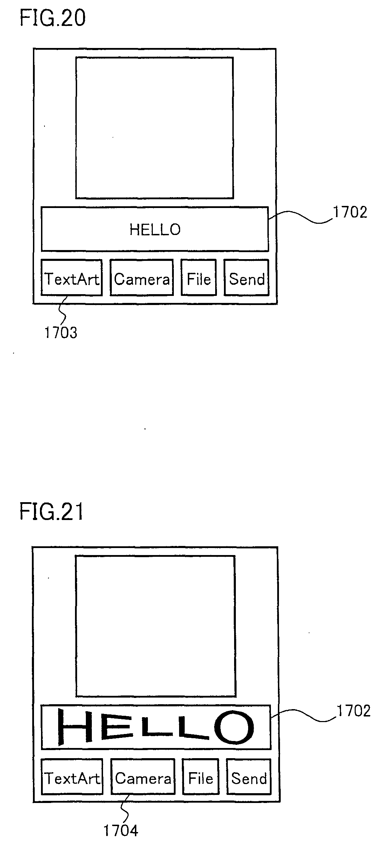

Referring to Figs. 20 and 21 illustrating specific examples of screen display, description will now be given on changes which occur on screen of display 1302 of service utilization terminal 1301 when the external function is utilized.

When "Hello" is entered in Text region 1702 of service utilization terminal 1301 on the screen illustrated in Fig. 20, and TextArt button 1703 is depressed, the character string "Hello" is passed to service provision server 1306 providing the TextArt function. Service provision server 1306 provides the character string "Hello" decorated with the TextArt function.

Fig. 21 illustrates a state in which the decorated character string "Hello" obtained by the above processing is displayed in Text region 1702. This state is achieved owing to the following facts. When service utilization terminal 1301 is executing application 405 which is specifically exemplified in Fig. 7, connector data 710 including input/output definition 805a illustrated in Fig. 12 is obtained from connector data storage region 700 based on the description of <setMedia func = "name: TextArt" ··· scope = "Terminal"/> included in description 602 of application 405, and input/output definition 805a includes description 2503 indicating the address of service provision server 1306 as a location of the TextArt function. Thus, input/output definition 805 of connector data 710 corresponding to the function, which is included in application 405 executed in service utilization terminal 1301, is set to pass the character string ("Hello" in this example), which is entered in the Text region of service utilization terminal 1301, to the TextArt function of service provision server 1306, and to display the result obtained by the TextArt function in Text region 1702.

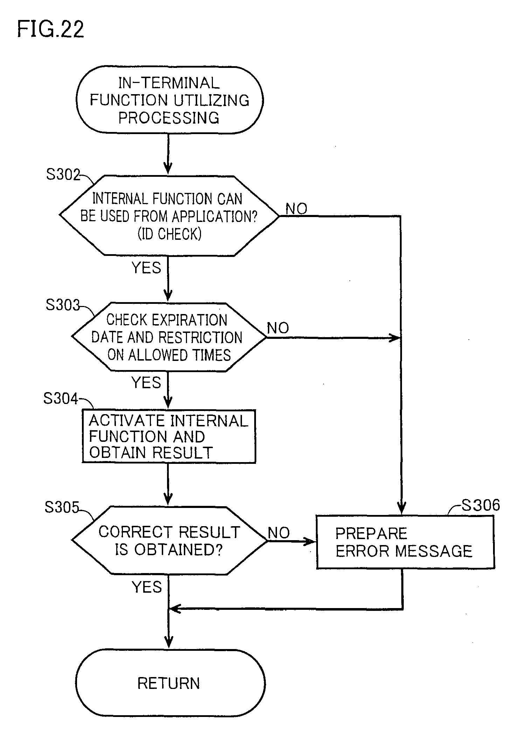

Referring to Fig. 22, description will now be given on details of the in-terminal function utilizing processing in step S110 illustrated in Fig. 17.

Referring to Fig. 22, when service utilization terminal 1301 utilizes the in-terminal function, i.e., the function inside the terminal, application managing unit 110 first determines in step S302 whether the active application can utilize the intended function inside service utilization terminal 1301 or not. The determination in step S302 is performed by comparing the identifier set in the connector with the identifier set in the application. More specifically, connector data 710 specifically exemplified in Fig. 11 has connector identifier 802, in which the value of "None" is set in the element named "vendorLimit". This means that any application can utilize the function of this connector. In this case, therefore, application managing unit 110 determines in step S302 that the application illustrated in Fig. 6 can utilize the function inside the terminal set in the connector illustrated in Fig. 11.

As described above, when it is determined in step S302 that the active application can utilize the function inside service utilization terminal 1301 (YES in S302), the process proceeds to step S303. Otherwise (NO in S302), the process proceeds to step S306.

In step S303, connector managing unit 120 checks the expiration date and maximum utilization number of the connector, and determines whether the connector can be still utilized or not. It is assumed that storage region 160 has stored the number of times that the connector to be handled as the target in service utilization terminal 1301 was utilized, and the current date and time can be obtained from service utilization terminal 1301. In step S303, the expiration date and maximum utilization number of the connector can be obtained by referring to the values set in expiration date 803 and maximum utilization number 804 of connector 710 illustrated in Fig. 9.

When it is determined in step S303 that the connector is still valid, and the current number of utilization times is smaller than the maximum utilization number (YES in S303), the process proceeds to step S304. When the connector has expired or the current number of utilization times has reached the maximum utilization number (NO in S303), the process proceeds to step S306. More specifically, in connector data 710 specifically exemplified in Fig. 11, "expireDate" of expiration date 803 is "None", which means that the expiration date is not set or the connector can always be utilized. Also, "expireNumber" of allowed utilization number 804 is "None", which means that the maximum utilization time is not set or the data can be utilized any number of times.

In step S304, the internal function kept in service utilization terminal 1301 becomes active to provide a result. Thus, in step S304, internal function calling unit 1201 in internal function managing unit 140 passes the data required for the function inside service utilization terminal 1301 defined in input/output definition 805 to service provision server 1306, and activates it. Internal function result analyzing unit 1202 receives the result provided by the internal function, and passes it to active application 405. Thereafter, the processing in step S304 ends, and the process proceeds to step S305.

In step S305, it is determined whether a correct result is obtained by the function inside active service utilization terminal 1301 or not. This determination is performed, e.g., by determining whether the data obtained by the function inside service utilization terminal 1301 is the data of the type defined by input/output definition 805 or not. When it is determined that the obtained result is not correct (NO in S305), the process proceeds to step S306, in which an error message is produced to that effect. Then, the subroutine ends, and the process proceeds to the main routine in Fig. 17. When the correct result is obtained (YES in S305), the subroutine ends, and the process proceeds to the main routine in Fig. 17.

With reference to Figs. 21 and 23 - 27 illustrating specific examples of screens, description will now be given on the changes which occur in screen on display 1302 of service utilization terminal 1301 when the internal function is utilized.

When a user depresses Camera button 1704 on service utilization terminal 1301 while the screen illustrated in Fig. 21 is being displayed, Camera function 13 03 in terminal 1301 starts.

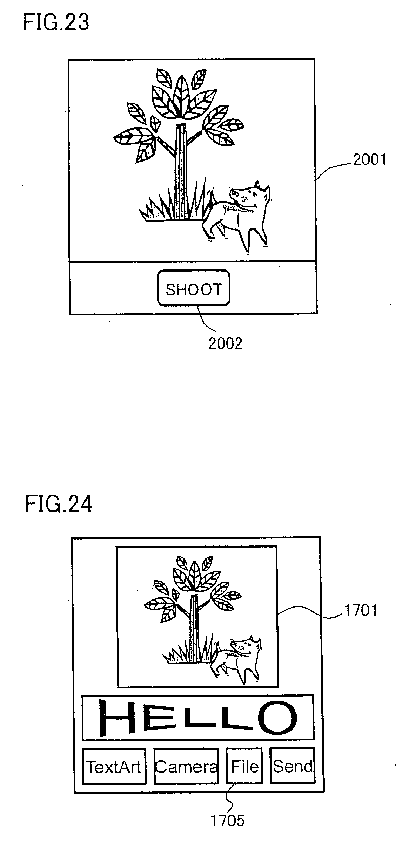

Fig. 23 illustrates a specific example of an image capturing or shooting screen displayed on display 1302 of service utilization terminal 1301 when Camera function 1303 is active. Referring to Fig. 23, the shooting screen includes a region 2001 in which an image captured by a camera lens (not shown) is displayed, and a shutter button 2002.

When a user depresses shutter button 2002 while the shooting screen illustrated in Fig. 23 is being displayed, the image displayed on display 1302 changes to a composite image illustrated in Fig. 24. Referring to Fig. 24, an image captured by Camera function 1303 is displayed in Image region 1701 on the composite screen. This state is achieved owing to the following facts. When service utilization terminal 1301 is executing, e.g., application 405 illustrated in Fig. 7, connector data 710 including input/output definition 805b illustrated in Fig. 13 is obtained from connector data storage region 700 based on the description of <setMedia func = "name: Camera" ··· scope = "Terminal"/> included in description 602 of application 405, and input/output definition 805b thus obtained is set such that the image captured by Camera function 1303 inside service provision server 1306 is displayed in Image region 1701.

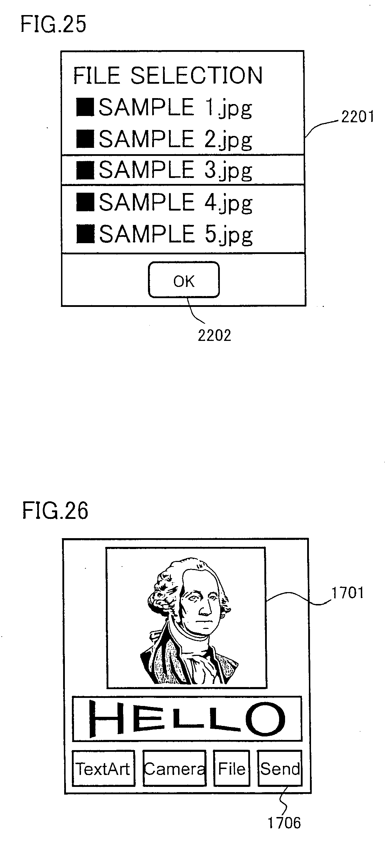

Further, when the user depresses File button 1705 while the composite screen illustrated in Fig. 24 is being displayed, File function 1304 in service utilization terminal 1301 starts to change the screen displayed on display 1302 to a file selection screen illustrated in Fig. 25. Referring to Fig. 25, the file selection screen includes a File region 2201 for displaying a file list stored in storage region 1601 of this terminal and an OK button 2202.

When the user selects a predetermined file in File region 2201, and depresses OK button 2202 while the file selection screen illustrated in Fig. 25 is being displayed, the selected file is read from storage region 160, and the screen displayed on display 1302 changes to the file display screen illustrated in Fig. 26.

Referring to Fig. 26, an image selected by File function 1304 is displayed in Image region 1701 of the file display screen. This is achieved by the following fact. When service utilization terminal 1301 is executing, e.g., application 405 illustrated in Fig. 7, connector data 710 not including description 2503 indicating the address of service provision server 1306 as the location of the File function is not included in input/output definition 805 based on the description of <setMedia func = "name: File" ··· scope = "Terminal"/> included in description 602 of application 405, or connector data 710 including description 2503 indicating service utilization terminal 1301 is obtained from connector data storage region 700, and its input/output definition 805 has such setting that the image selected by File function 1304 of service utilization terminal 1301 is displayed in Image region 1701.

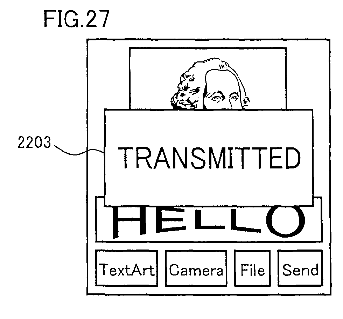

Further, when a user depresses Send button 1706 while the file display screen illustrated in Fig. 26 is being displayed, Send function 1305 in service utilization terminal 1301 starts. When Send function 1305 starts, the contents (Image and Text), which have been prepared as already described, are transmitted to the predesignated destination. Fig. 27 illustrates a specific example of a transmission completion screen which is displayed on display 1302 when the transmission is completed, and thus illustrates a specific example of the screen representing the completion of the transmission. As illustrated in Fig. 27, when Send function 1305 starts and transmits the prepared message, display 1302 displays a transmission completion indication 2203 to that effect.

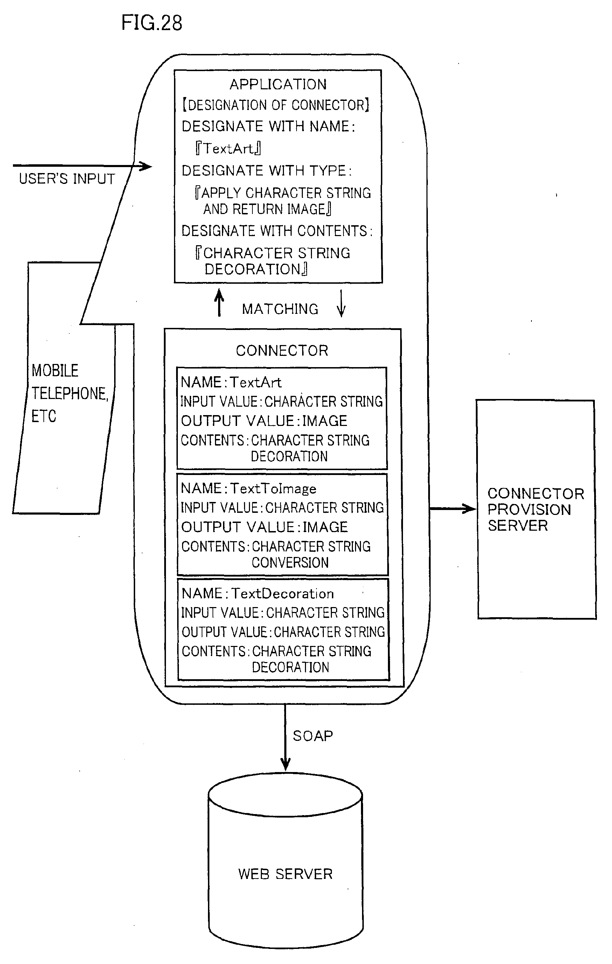

As described above, the service utilization terminal according to the invention executes the service utilization processing illustrated, e.g., in Fig. 28 to utilize the functions via the connectors, and thereby can effectively accept the provision of the service, e.g., as follows. Referring to Fig. 28, when the service utilization terminal such as a mobile telephone accepts a user's input to execute the application, the function required for the application is utilized via the connector. In this operation, the connector is obtained from the connector provision server by issuing a request thereto, if necessary. Thereby, the application can utilize the function inside the service utilization terminal and the function, which is present outside the terminal and is provided from service provision server, in the same manner. Thus, the user can utilize the application without being aware of the fact that the service utilization terminal includes or does not include the function required for the application, which increases the user's convenience.

Based on the comparison (or matching) between the identifiers of the connector and the currently active application, it is determined whether the specific function can be utilized from the application or not, and thereby it is possible to restrict the applications that can utilize the functions inside and outside the service utilization terminal. Since the function provided by the service provision server is utilized via the connector, it is possible to restrict the utilization of the function which is provided by the service provision server without providing the connector. Thus, it is possible to prevent the use of the function which is not intended by the application producer. More specifically, such a situation can be prevented that a connector not intended by the application producer is used for utilizing the function when executing the application. Consequently, such a situation can be prevented that the function not intended by the application producer is used for executing the application. Thereby, the service utilization terminal executes the application as intended by the application producer. It is also possible to prevent a situation that the service utilization terminal executes a function, e.g., harmful to the service utilization terminal. This can increase the safety of the users utilizing the Web service.

Further, the connector sets the location of the function required for executing the application. Therefore, the application producer can produce the application executing the intended function by setting the connector without being aware of that the required function is included in the service utilization terminal or that it is included in the service provision server. Therefore, even when the information (e.g., location and version) of the function required for executing the application is changed, it is not necessary to reflect the change in the application, and only rewriting or substitution of the connector can reflect the above change in the application. This facilitates production of the application.

### [First Modification]

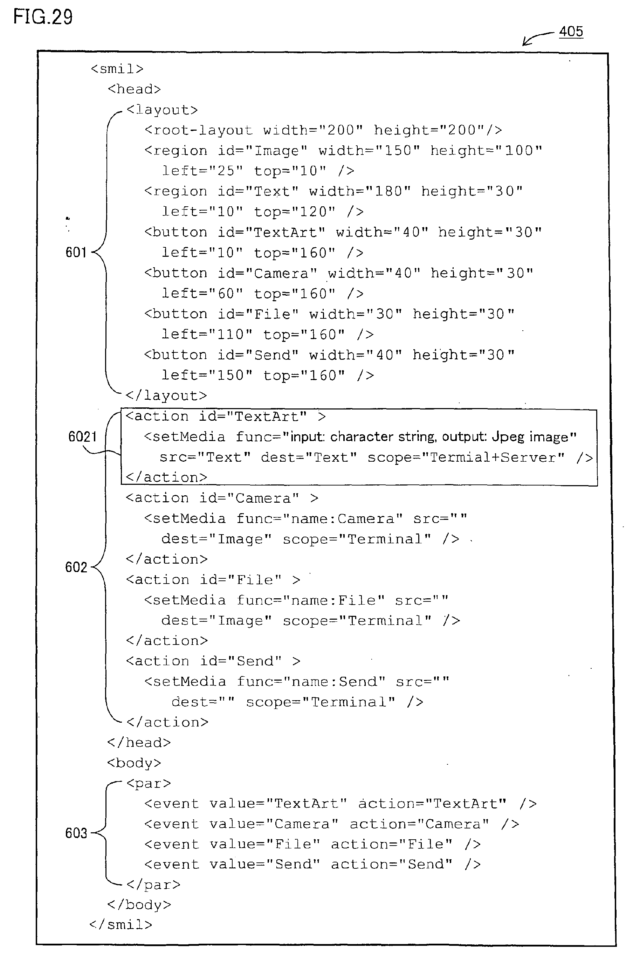

As a first modification, Fig. 29 illustrates another specific example of application 405. The first modification has a distinctive feature that the connector corresponding to the function used when executing application 405 is set according to a search condition of a description 6021. Referring to Fig. 29, application 405 in the first modification specifically sets an operation of an action named "TextArt" as "it utilizes a connector which is retrieved from a search range defined as "Terminal + Server (service utilization terminal 100 and connector provision server 280)", and is configured to employ input data of a type of a character string and to provide output data of a type of a Jpeg image, a value in the Text region is passed to the corresponding function and a result received from the function is displayed in the Text region."

When executing application 405 illustrated in Fig. 29 on service utilization terminal 1301, the search range for the connector is determined to be both the inside and outside of service utilization terminal 1301 in foregoing step S104, and the corresponding connector is obtained in step(s) S1051 and/or S1052. More specifically, reference is made to descriptions 2501 and 2502 in input/output definition 805 of connector data 710 illustrated in Fig. 12, and a search is made for such a connector that data provided to the function corresponding to the connector is of a type of a character string, and data provided from the function corresponding to the connector is of a type of a Jpeg image.

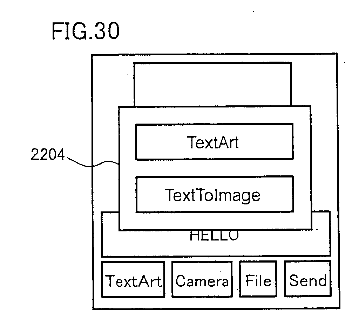

When a plurality of connectors are obtained in step(s) S 1051 and/or S1052, it is preferable to select the connector to be utilized by displaying a connector selection screen 2204 on display 1302 as illustrated in Fig. 30 prior to the processing in step S108.

By setting the connector according to the above search condition in the application, it is possible to set the connector for executing the intended function even when the application producer does not known the location of the connector.

When the service utilization terminal executes the above application, the optimum connector is selected from the plurality of retrieved connectors, and the function corresponding to the selected connector can be executed.

### [Second Modification]

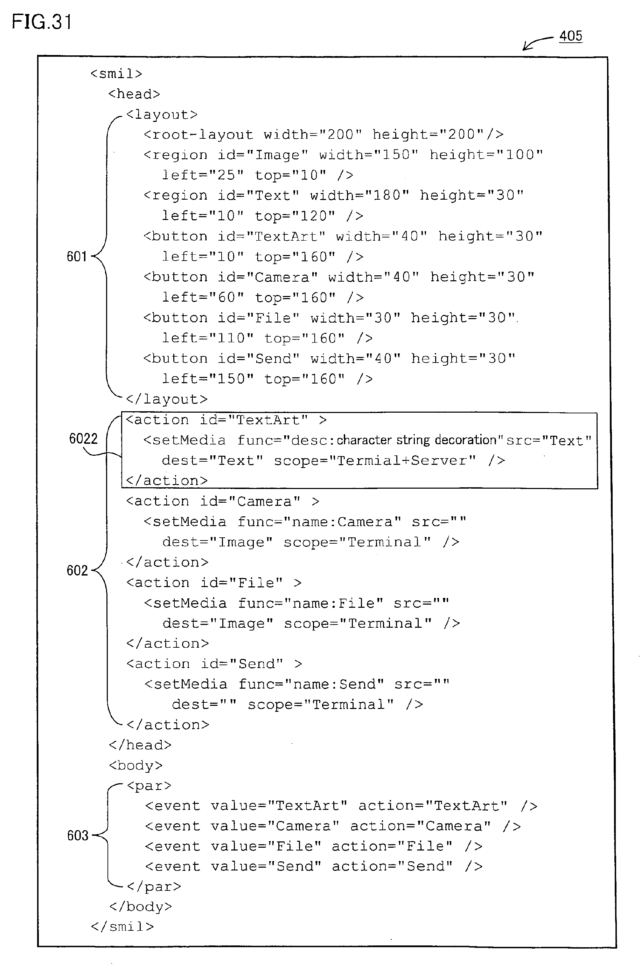

As a second modification, still another specific example of application 405 is illustrated in Fig. 31. The second modification has a distinctive feature that the connector corresponding to the function used for executing application 405 is set in application 405 with a search condition of a description 6022. Referring to Fig. 31, application 405 in the second modification specifically sets an operation of an action named "Test Art" as "it utilizes a connector which is retrieved from a search range defined as "Terminal + Server (service utilization terminal 100 and connector provision server 280)", and has a service described as "character string decoration", a value in the Text region is passed to the corresponding function and a result received from the function is displayed in the Text region".

When executing application 405 illustrated in Fig. 31 on service utilization terminal 1301, the search range for the connector is determined to be both the inside and outside of service utilization terminal 1301 in foregoing step S104, and the corresponding connector is obtained in step(s) S1051 and/or S1052. More specifically, reference is made to description 2503 or the like of input/output definition 805 of connector data 710 illustrated in Fig. 12, and a search is made for a connector that is correspondingly described in the description of the service not illustrated in Fig. 12.

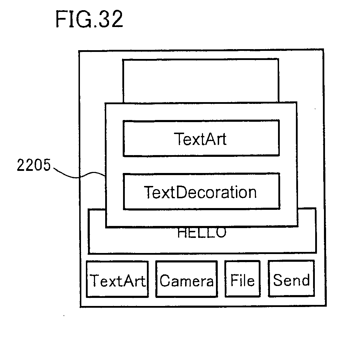

When the plurality of corresponding connectors are obtained in step(s) S1051 and/or S1052, it is preferable to select the connector to be utilized by displaying a connector selection screen 2205 on display 1302 as illustrated in Fig. 32 prior to the processing in step S108.

By setting the connector according to the above search condition in the application, it is possible to set the connector for executing the intended function even when the application producer does not known the location of the connector, similarly to the first modification.

When the service utilization terminal executes the above application, the optimum connector is selected from the plurality of retrieved connectors so that the function corresponding to the selected connector can be executed.

### [Third Modification]

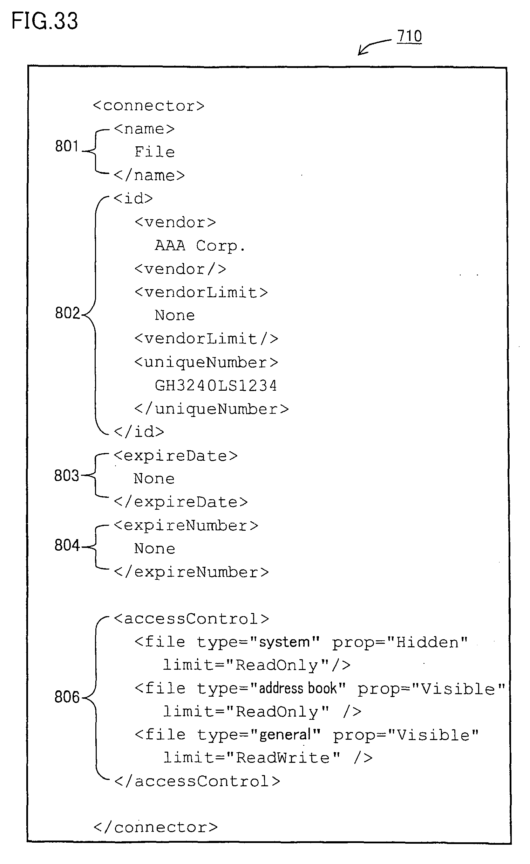

As a third modification, yet another specific example of connector data 710 is illustrated in Fig. 33. The third modification has a distinctive feature that restrictions on access are set as can be seen in a description 806 in view of a type of the data to be handled by the corresponding function. More specifically, connector data 710 in the third modification illustrated in Fig. 33 is set to handle the data by the File function such that the system data is read-only data, and is not displayed, address book data is read-only data, and is displayed, and general data is readable data, and is displayed.

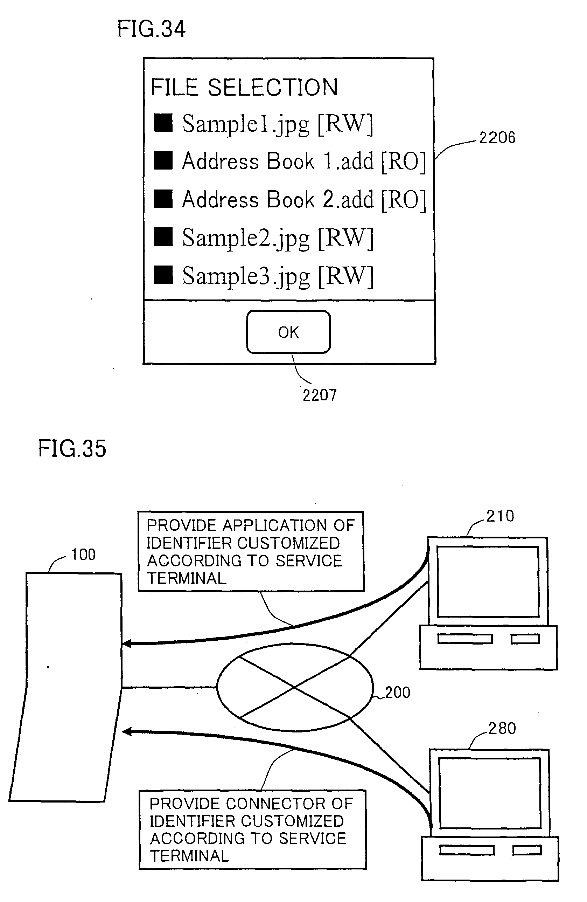

When service utilization terminal 1301 executes the File function via connector data 710 illustrated in Fig. 33, a file selection screen is displayed as illustrated in Fig. 34 according to result display in step S111. Referring to Fig. 34, Sample1.jpg, Sample2.jpg and Sample3.jpg are displayed in File region 2206 as data handled by the File function together with "[RW]" indicating the readable and writable (deletable) data. Also, address books 1.add and 2.add are displayed together with "[RO]", which indicates that the data allows only browsing, and does not allow change and deletion of details thereof. Further, a file (not shown), of which display is restricted by "porp = "Hidden"", is not displayed.

As described above, the access to the data handled by the function corresponding to the connector is restricted so that it is possible to provide a service achieving high levels of security.

Naturally, the restrictions on the access to the data handled by the corresponding function may be achieved not only by the setting in the connector but also by the function corresponding to the connector.

### [Fourth Modification]

As illustrated in Fig. 35, a four modification has a distinctive feature that service utilization terminal 100 accepts the application, which is the function customized according to service utilization terminal 100, and is provided from service provision server 210, and also accepts the application of the connector, which is customized according to service utilization terminal 100, and is provided from connector provision server 280.

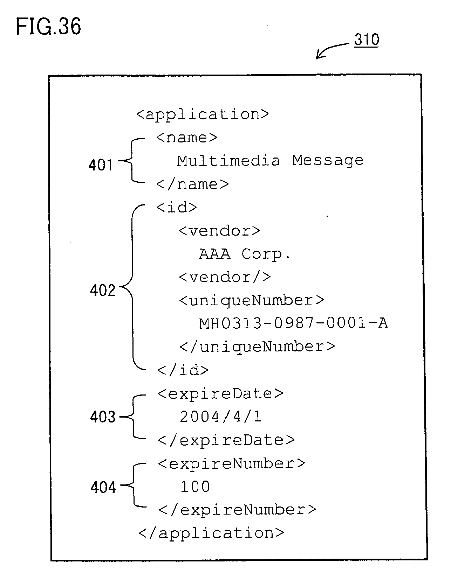

More specifically, when service utilization terminal 100 requests a specific function to service provision server 210, service provision server 210 customizes the required function according to service utilization terminal 100, and application identifier 402 corresponding to service utilization terminal 100, e.g., illustrated in Fig. 36 is added to application data 310.

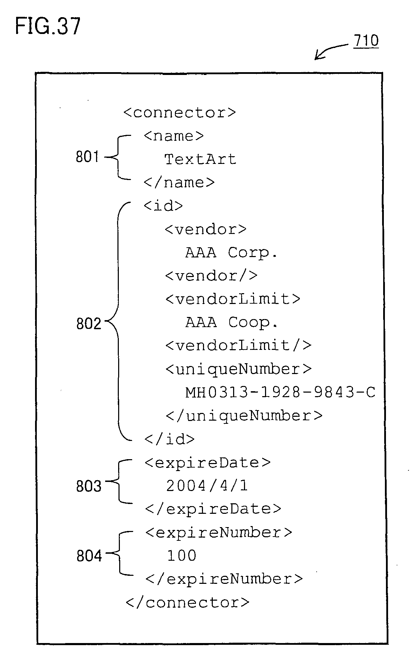

When service utilization terminal 100 requests connector provision server 280 to provide a specific connector, connector provision server 280 customizes the connector according to service utilization terminal 100, and connector identifier 802 corresponding to service utilization terminal 100 illustrated in Fig. 37 is added to connector data 710.

Service provision server 210 and connector provision server 280 requested by service utilization terminal 100 uniquely assign these application identifier 402 and connector identifier 802 by using unique information stored in general user unchangeable region 132 of storing unit 13 of service utilization terminal 100. The above unique information of service utilization terminal 100 may be automatically transmitted from service utilization terminal 100 together with the request, or may be obtained from service utilization terminal 100 by service provision server 210 and connector provision server 280 receiving the request. Also, the unique information may be stored in advance in a database (not illustrated) which can be accessed by service provision server 210 and connector provision server 280.

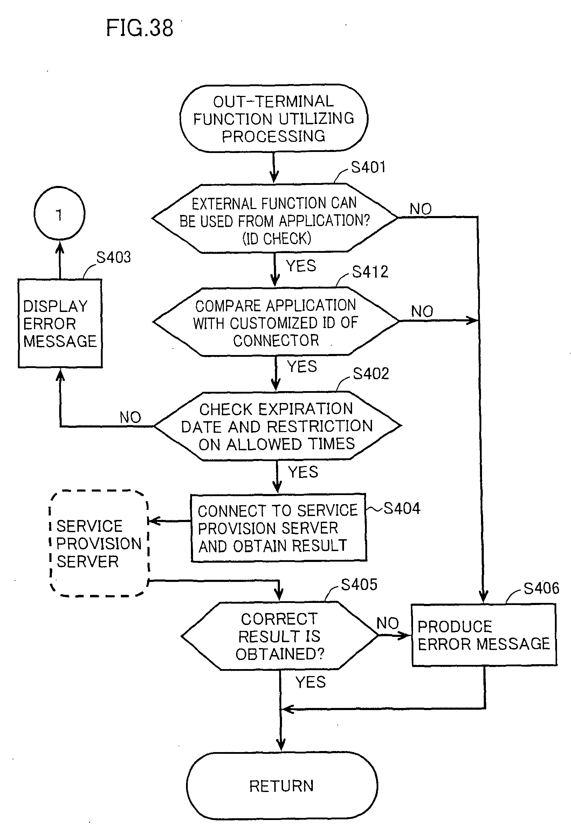

In the above case, service utilization terminal 100 executes the processing of utilizing the function outside the terminal as illustrated in Fig. 38. More specifically, when processing similar to that in step S201 of Fig. 19 is executed in step S401, and it is determined that the active application can utilize the external function (YES in S401), the process proceeds to step S412 to compare identifier 402 of the application with identifier 802 of the connector, and it is determined whether service utilization terminal 100 can utilize the corresponding function via connector 710 for executing application 405 or not. In step S412, it is confirmed that identifiers 402 and 802 are both the identifiers customized according to service utilization terminal 100. More specifically, it is determined, e.g., whether these identifiers 402 and 802 include information representing service utilization terminal 100 or not.

When it is confirmed from the comparison in step S412 that identifier 402 of the application and identifier 802 of the connector are customized according to service utilization terminal 100 (YES in S412), the process proceeds to step S402. The processing in and after step S402 is substantially the same as that in and after step S202 already described.

When it is confirmed from the result of comparison in step S412 that at least one of identifier 402 of the application and identifier 802 of the connector is not customized according to service utilization terminal 100 (NO in S412), the process proceeds to step S406, in which an error message is provided. Thereby, the processing ends, and the process returns to the main routine in Fig. 17.

As described above, the service utilization terminal of the fourth embodiment of the invention has a distinctive feature that it executes the application with the application and connector customized according to the service utilization terminal. This can ensure intended security for the application executed by the service utilization terminal and the connector. When mismatching occurs between the application and the connector, the application cannot use the connector not corresponding to it so that the service utilization terminal can execute the function intended by the application producer.

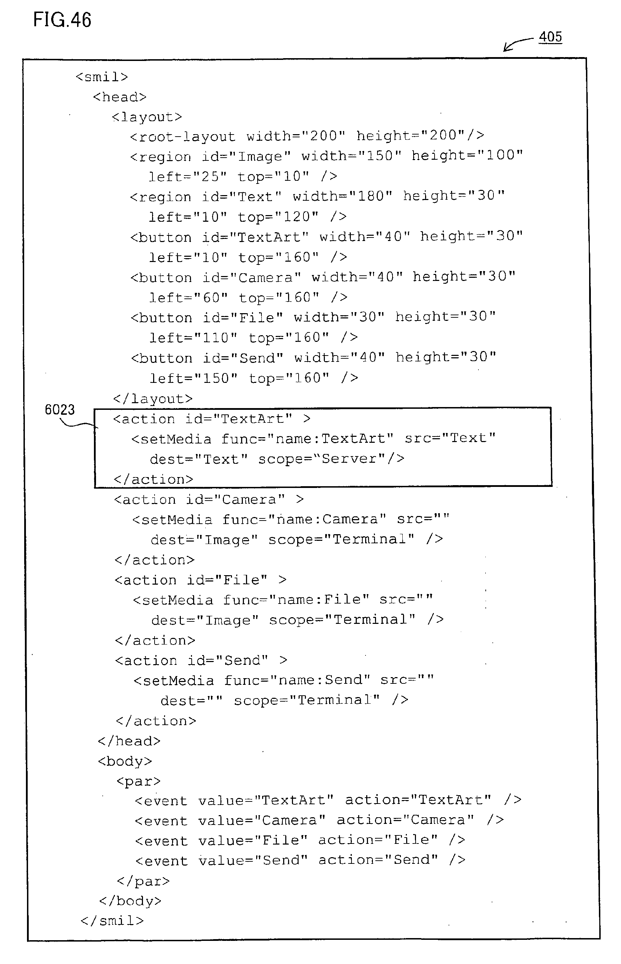

When application 405 illustrated in Fig. 46 is being executed in the processing performed by service utilization terminal 1301 illustrated in Fig. 17 already described, processing in step S1041 is performed to search a defined search range for a required connector with reference to a Scope attribute value in description 6023. In this example, "scope = "Server"" is described in description 6023 so that it is determined in step S1044 that the connector is obtained by connecting to connector provision server 1307 and downloading the connector therefrom. When the Scope attribute value in application 405 is described as "scope = "Terminal + Server"", it is determined as follows. Service utilization terminal 1301 first searches connector data storage region 700 in the terminal for the required connector. When it cannot find the connector, service utilization terminal 1301 is then connected to connector provision server 1307, and downloads the required connector. Independently of the Scope attribute value, service utilization terminal 1301 may be connected to connector provision server 1307 for downloading the connector every time the connector is required. Also, the connector provided by connector provision server 1307 may be compared with the connector held in connector data storage region 700 in the terminal, and service utilization terminal 1301 may be connected to connector provision server 1307 to download the required connector when the connector provided by connector provision connector. Foregoing Fig. 46 illustrates a specific example in the case where application 405 is described with expanded SMIL. However, application 405 may be implemented in another program such as JAVA® language or C language, or may be represented in another format.
(Remarks: The term "JAVA" is a registered Trademark of Sun Microsystems, Inc., Santa Clara, California, U.S.A.)

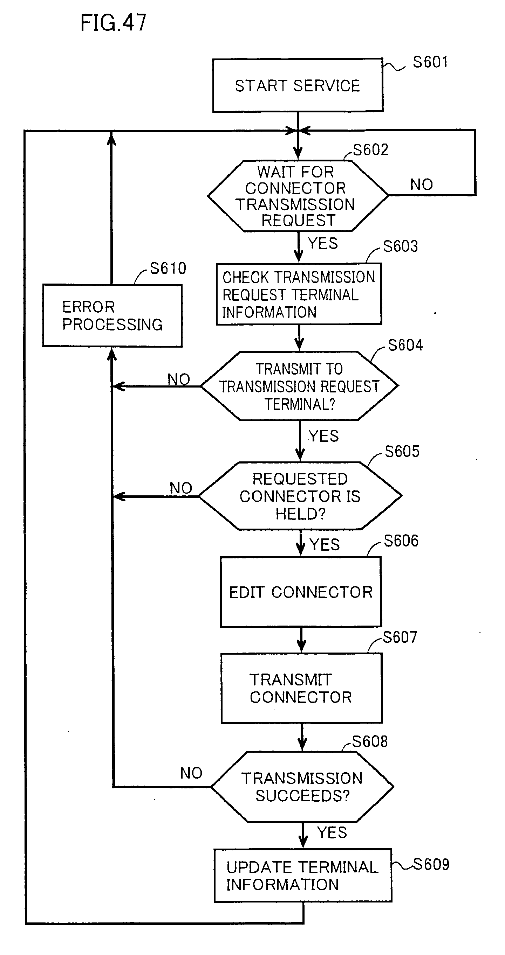

In the above case, connector provision server 1307 performs connector transmitting processing as will now be described with reference to a flowchart of Fig. 47. The processing illustrated in the flowchart of Fig. 47 is implemented by controlling various portions and units illustrated in Fig. 41, and by control unit 22 performs this control by reading and executing the programs stored in storing unit 23 when connector provision server 1307 executes a service of providing the connector to service utilization terminal 1301.

Referring to Fig. 47, the service starts in step S601. In next step S602, when service utilization terminal 1301 requests the connector (YES in S602), connector data managing unit 920 obtains and confirms the information of the requester, i.e., service utilization terminal 1301.

In step S603, service utilization terminal 1301 may be confirmed by obtaining, as the service utilization terminal information, a terminal ID included in the request information itself indicating the connector request, and alternatively a user ID information of service utilization terminal 1301 may be utilized as the service utilization terminal information. As the service utilization terminal information, it is possible to employ further information which allows determination of whether the provision of the connector is allowed or not, based on the service utilization terminal information. For obtaining further detailed information in step S603, connector provision server 1307 may inquire of service utilization terminal 1301 about the information of the terminal itself and the information of the user using the terminal.

In next step S604, connector data managing unit 920 determines based on the service utilization terminal information obtained in step S603 whether the connector is to be provided to service utilization terminal 1301 or not. When it is determined in step S604 that the connector is not to be provided, the process proceeds to step S601. When it is determined in step S604 that the connector is to be provided, the process proceeds to step S605.

The determination is step S604 may be performed based on the service utilization terminal information obtained in step S603. More specifically, reference may be made to information which is prestored in terminal managing unit 510 and relates the terminals allowing provision of the connectors, and the determination may be performed based on the service utilization terminal information obtained in step S603. Inquiry to another authentication server may be made based on the service utilization terminal information obtained in step S603, and the determination may be made based on a result of this inquiry.

When connector provision server 1307 does not utilize any service utilization terminal information of service utilization terminal 1301, the process may proceed to step S604 without processing in step S603. In this case, the processing in step S604 does not utilize the information provided from service utilization terminal 1301, and it is determined whether the connector is to be provided or not, depending on the state of connector provision server 1307 itself. When connector provision server 1307 does not perform any access restriction, the process may proceed to step S605 without processing in step S604.

In step S605, connector data managing unit 920 determines whether connector data storage region 900 has held the required connector or not. Determination of whether connector data storage region 900 has held the required connector or not is performed by searching connector data storage region 900 by connector data managing unit 920 to determine whether the connector in question is present or not.

When connector provision server 1307 does not have the connector in question (NO in S605), the process proceeds to step S610 for error notifying processing. When connector provision server 1307 holds the connector in question (YES in S605), the process proceeds to step S606, in which connector data managing unit 920 partially edits the data of connector data 910 held thereby when necessary, and then the process proceeds to step S607, in which communication control unit 530 transmits connector data 910 in question to service utilization terminal 1301.

As one of specific examples of editing the connector in step S606, connector data 910 may be edited according to the terminal information of service utilization terminal 1301 obtained in step S603.

More specifically, when reference is made to the terminal information of service utilization terminal 1301 to detect that service utilization terminal 1301 has started the charged application, connector data managing unit 920 performs an edit not to indicate the maximum utilization number of connector data 910 or to postpone the expiration date infinitely in step S606. By the above edit, the function specified by connector data 910 can be utilized without limitation when executing the application on service utilization terminal 1301.

More specifically, when reference is made to the terminal information of service utilization terminal 1301 to detect that service utilization terminal 1301 has started the application in a state of an "evaluation copy", connector data managing unit 920 performs an edit in step S606 to set the maximum utilization number of connector data 310 at 10 times, or to postpone the expiration date by one week from the date of request. By the above edit, the number of allowed utilizing operations of the function specified by connector data 910 as well as the expiration date can be restricted when executing the application on service utilization terminal 1301.

More specifically, the terminal information of service utilization terminal 1301 obtained in step S603 specifies the type of service utilization terminal 1301 and a contract communication carrier, and connector data managing unit 920 edits connector data 910 according to them in step S606. For example, it is preferable to perform an edit, e.g., by changing the format of the data provided from the function specified by connector data 910 according to a resolution of a display device in service utilization terminal 1301 of the specified type, a displayable color tone, a quantity of data which can be transmitted by a communication carrier of specified service utilization terminal 1301 and others.

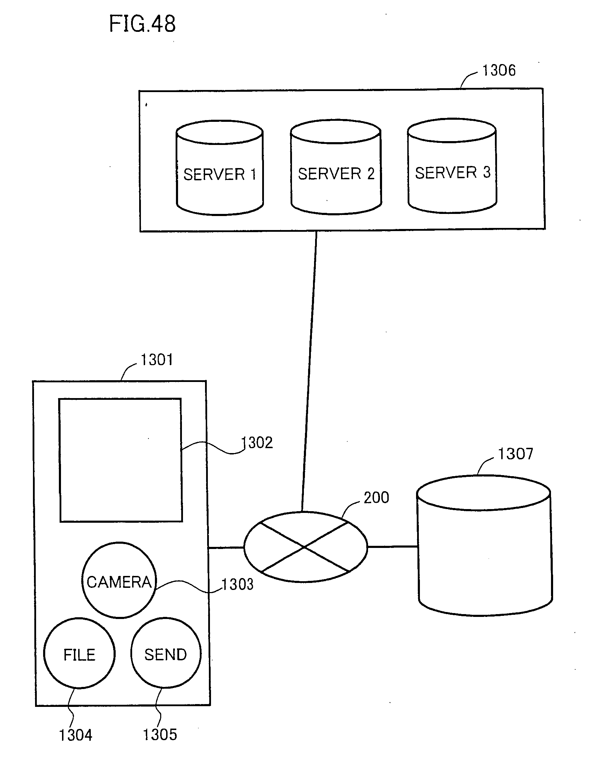

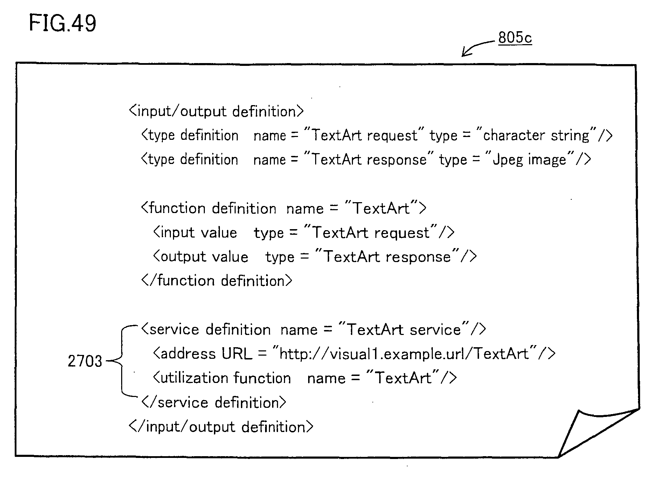

In another specific example of a manner of editing the connector, connector data 910 may be edited according to the format of service provision server 1306. More specifically, as illustrated in Fig. 48, a plurality of service provision servers 306 (Server1 - Server3) providing the same function may be present. This system structure is used for the purpose of dealing with such a situation that a plurality of service utilization terminals simultaneously make access, and is generally employed when such a framework is employed that the plurality of service provision servers can operate for providing the similar functions, and the different service provision servers operate in response to respective requests made by the service utilization terminals. In step S606, connector data managing unit 920 of the above system performs an edit to change the service provision server name (information of access to service provision server) described in connector data 910 in a random fashion or according to a predetermined algorithm. More specifically, the service definition in connector data 910 is edited to provide a line 2703 in an input/output definition 805c which is a specific example of the input/output definition in Fig. 49. This edit an prevent a concentration of access from service utilization terminals 1301 to a specific service provision server without employing a system of dispersing the access to the service provision servers, and can disperse the access.

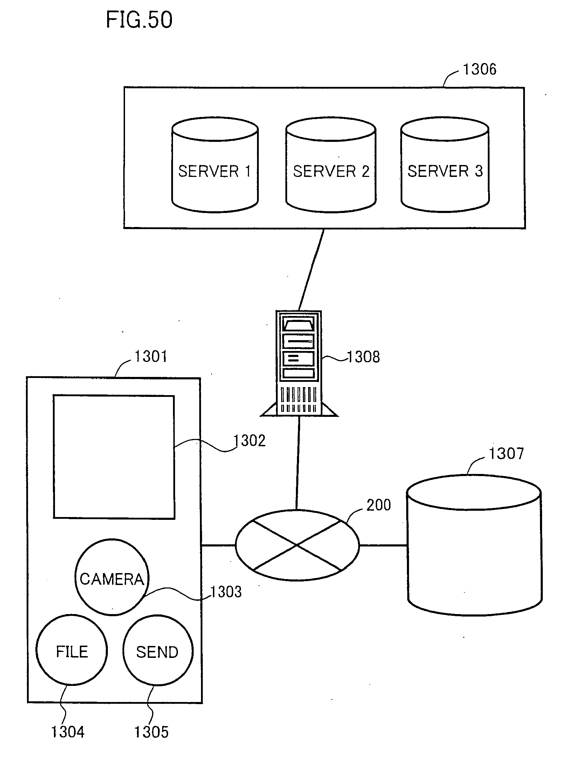

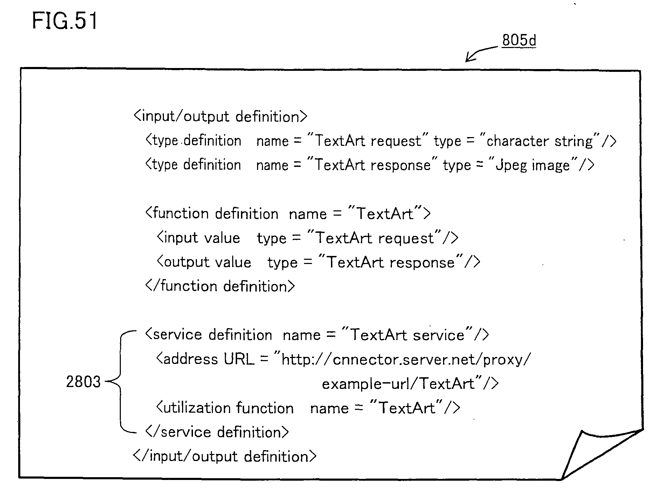

The following specific example other than the above may be employed as a manner of editing connector data 910 according to the format of service provision server 1306. As illustrated in Fig. 50, the service provision system may include a relay station (also referred to as a "proxy server") 1308 relaying provision of the function between service utilization terminal 1301 and service provision server 1306, and service provision server 1306 may provide the service via relay server 1308. In this system, connector data managing unit 920 performs the edit in step S606 to change the information of access to service provision server 1306, which is actually providing the service, into the information of access to service relay server 1308. More specifically, the service definition in connector data 910 is edited to provide a line 2803 in an input/output definition 805d, which is a specific example of the input/output definition and is illustrated in Fig. 51. Service utilization terminal 1301 receiving the connector thus edited requests the provision of the function while assuming that service relay server 1308 is service provision server 1306, according to the description of the connector. From a viewpoint of ensuring security, such restrictions are generally imposed in many cases that the application can access only one server when this application is being executed in the service utilization terminal such as a mobile telephone. However, a plurality of service provision servers may provide functions, or it may be desired to utilize a similar function which is provided by another server similar and is better than that provided by the current server. In this case, service relay server 1308 is assumed as service provision server 1306 according to the description of the connector, and is accessed. Thereby, service utilization terminal 1301 can utilize the optimum function regardless of restrictions on the access to the service provision servers.

When transmission processing in step S608 correctly ends (YES in S608), processing of updating the terminal managing information is executed in step S609. In step S609, the information of service utilization terminal 1301, which transmitted the connector obtained in step S603, and the fact that the connector is transmitted to this terminal are recorded in terminal information managing unit 210. In addition to the above processing of merely storing the information of service utilization terminal 1301, processing may be performed by cooperation with another charging server (not shown) to charge for the issuance of the connector together with the recording of the transmission of the connector. When the updating processing is not necessary, step S608 may be skipped, and the process may proceed to a subsequent step.

When it is determined in step S608 that the transmission processing abnormally ends (NO in S608), the process proceeds to step S610 for error notifying processing.

In step S610, a communication control 230 notifies service utilization terminal 1301 requesting the connector that the connector requesting procedure abnormally ended. If service utilization terminal 1301 has a time-out processing function or a communication error detecting function, the error notifying processing may be skipped, and only the error processing of connector provision server 1307 itself may be performed in step S610. Then, the process returns to step S602 for waiting for a next connector request.

Service utilization terminal 1301 receiving the requested connector from connector provision server 1307 executing the above processing accesses service provision server 1306 with reference to the access information described in the received connector so that the function provided by service provision server 1306 can be utilized.

### [Fifth Modification]

As a fifth modification, the service provision system illustrated in Fig. 50 already described may have such a structure that connector provision server 1307 has a function of relay server 1308, or connector provision server 1307 is integral with relay server 1308.

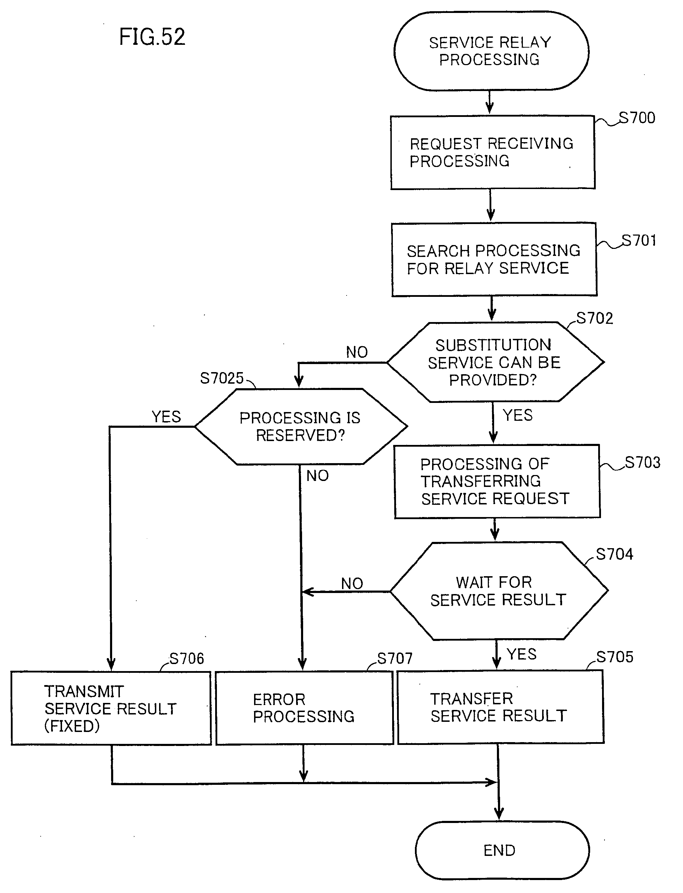

The service relay processing executed by connector provision server 1307 in the above case will now be described with reference to a flowchart of Fig. 52. The processing illustrated in the flowchart of Fig. 52 is implemented by controlling the various units and portions in Fig. 41, and this control is performed by control unit 22 which reads and executes the programs stored in storing unit 23 when connector provision server 1307 functioning as the relay server accepts the request for provision of the service from service utilization terminal 1301 instead of service provision server 1306.

Referring to Fig. 52, connector provision server 1307, which received the request for service provision from service utilization terminal 1301 in step S700, determines in step S701 whether the requested service (function) is a target of relay processing or not In step S701, connector data managing unit 920 searches connector data storage region 900 for connector data 910 which is edited to change the information (address) for access to service provision server 1306 to the information for access to connector provision server 1307 itself functioning as relay server 1308, and determines whether connector data 910 is provided to service utilization terminal 1301 or not.

When it is determined from the search in step S701 that connector data 910, which was edited to change the access information to the information for access to connector provision server 1307 itself, was provided, connector data managing unit 920 searches connector data storage region 900 for the original connector data corresponding to edited connector data 910 with reference to the service name described in the connector. When the original connector data is detected from the connector data storage region 900, it is determined that the request for service provision can be relayed (YES in S702), and the process proceeds to step S703.

In step S703, connector provision server 1307 transmits the request for service provision received from service utilization terminal 1301 to corresponding service provision server 1306 based on the access information described in the original connector data. In subsequent step S704, connector provision server 1307 waits for a service response from service provision server 1306.

When service provision server 1306 correctly returns the response (YES in S704), the process proceeds to step S705, and connector provision server 1307 transmits the returned result to service utilization terminal 1301, and the service relay processing ends.

When service provision server 1306 did not respond in step S704 (NO in S704), or when it is determined that the service (function) requested in step S702 is a target not to be relayed (NO in S702 and NO in S7025), the process proceeds to step S707, and connector provision server 1307 abandons the received data and temporary storage data, and performs error processing, e.g., by notifying service utilization terminal 1301 requesting the service provision to the effect that the service in question cannot be utilized.

In step S702, service provision server 1306 may recognize that it cannot provide the service, and may notify connector provision server 1307 to that effect. In this case, connector provision server 1307 determines that an reservation incapable of utilizing the service in question is made (NO in S702 and YES in S7025), and transmits the information, which indicates that a preset (fixed) service cannot be utilized, to service utilization terminal 1301 in step S706.

When the service provision server cannot provide the service for a certain period due to maintenance, it is generally necessary to notify in advance the service users of the stop of service, or to operate a substitution service provision server capable of providing the same services at the same address. By executing the processing described above, however, the above notification and the employment of the substitution service provision serve are not necessary, and the connector provision server can be operated to serve also as the substitution service provision server so that the service provision server can have a simple structure.

The service relay processing in the connector provision server of the fifth modification is completed by the foregoing processing.

### [Sixth Modification]

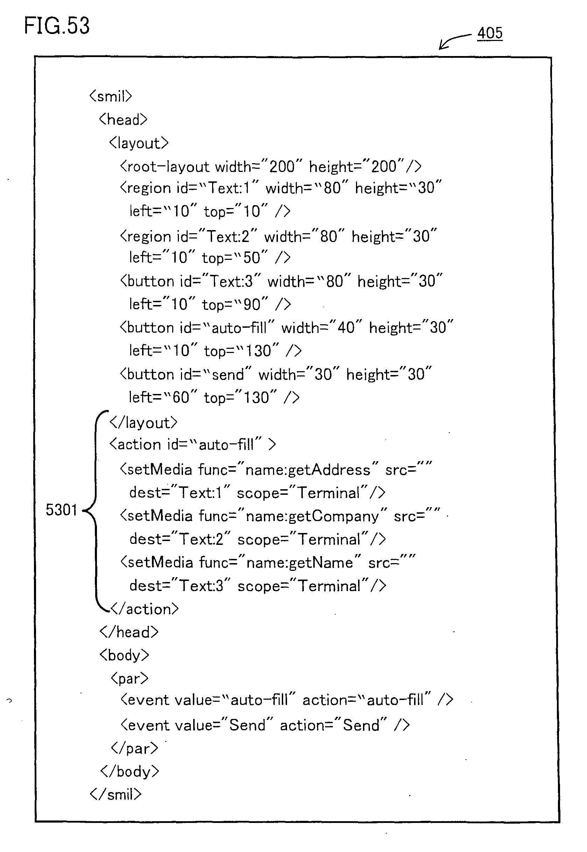

Referring to Fig. 53, application 405 according to a sixth embodiment has such a distinctive feature that a plurality of "action" elements are related to an "event" element, and can be simultaneously executed by a single input operation of the user.

More specifically, the following three operations are assigned to the action which is named "auto-fill" and is executed when an "auto-fill" button is depressed. The three operations are "a connector named "getAddress" retrieved from search range of "Terminal" is utilized, it is not necessary to pass a value to the corresponding function and a result received from the function is displayed in a "Text:1" " region", "a connector named "getCompany" retrieved from a search range of "Terminal" is utilized, it is not necessary to pass a value to the corresponding function and a result received from the function is displayed in a "Text:2" region" and "a connector named "getName" retrieved from a search range of "Terminal" is utilized, it is not necessary to pass a value to the corresponding function and a result received from the function is displayed in a "Text:3" region".

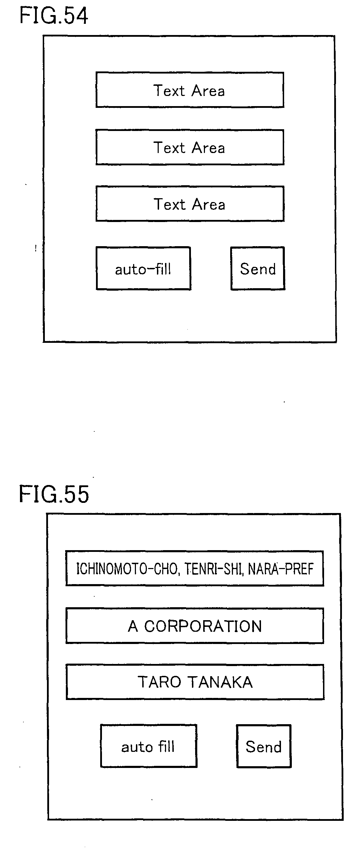

According to the application of the above specific example, the connectors are utilized as set in these operations. Thereby, in the case of an input screen illustrated in Fig. 54, i.e., in the case where several items of personal information such as an address, a company name and a personal name must be entered, these information items are automatically entered as illustrated in Fig. 55 by a single operation of depressing the "auto-fill" button regardless of whether these information items are located inside the terminal or outside it. This can reduce user's operations.

### [Seventh Modification]

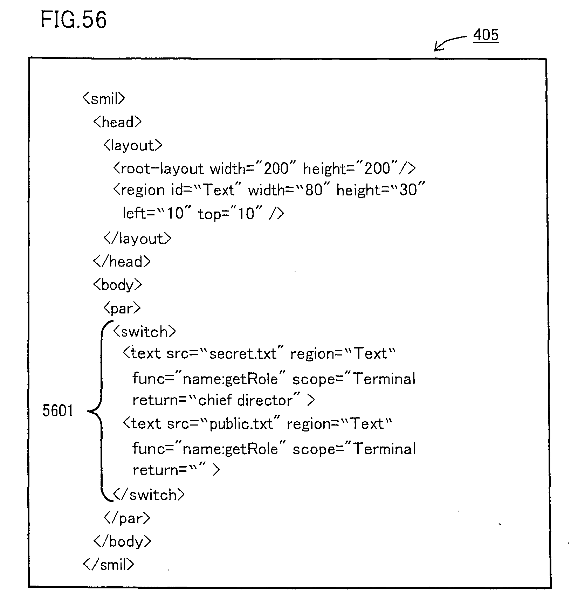

Referring to Fig. 56, application 405 according to a seventh modification has a distinctive feature that a "text" element displaying a character string is handled as a target of a "switch" element for selecting an element satisfying a condition from a plurality of elements, and this condition is based on the result received from the connector.

More specifically, the following two "text" elements are assigned to the "switch" element in a description 5601 in Fig. 56. Each of the two "text" elements sets an operation of "utilizing a connector named "getRole" retrieved from a search range of "Terminal", and displaying contents of a file "secret.txt" in the "Text" region when the result received from the function is "chief" or "director"" and an operation of "utilizing a connector named "getRole" retrieved from a search range of "Terminal", and displaying contents of a file "public.txt" in the "Text" region" when the result received from the function is empty".

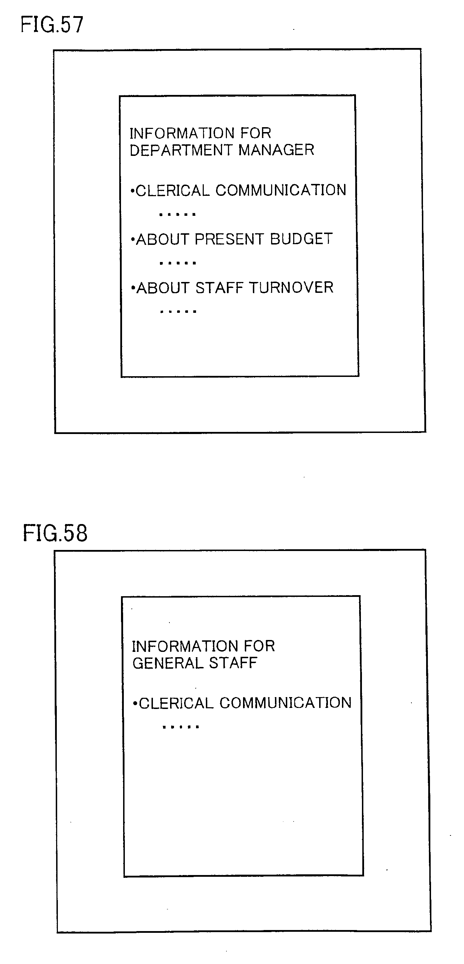

In the application of this specific example, the connector is utilized to perform the operation set in these "text" elements. For example, in connection with a work flow for a corporation, therefore, the application displays contents illustrated in Fig. 57 to employees authorized to view important information, and the same application displays contents in Fig. 58 to general employees. In this manner, the application can change the contents or detailed to be displayed according to the details of authority, and thus can change the range of display according to predetermined conditions.

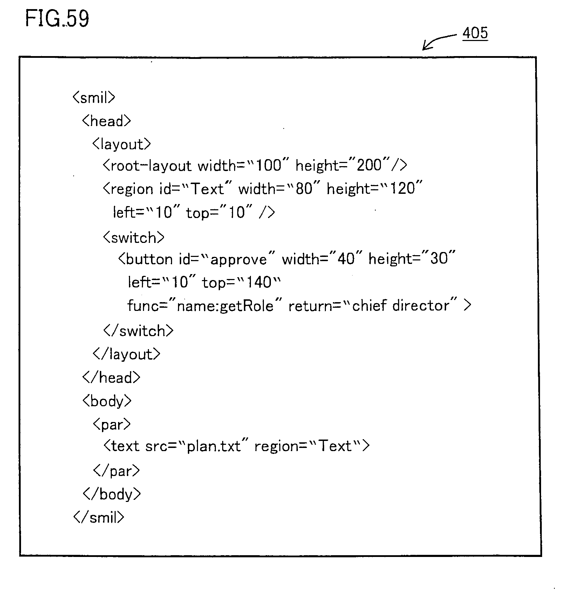

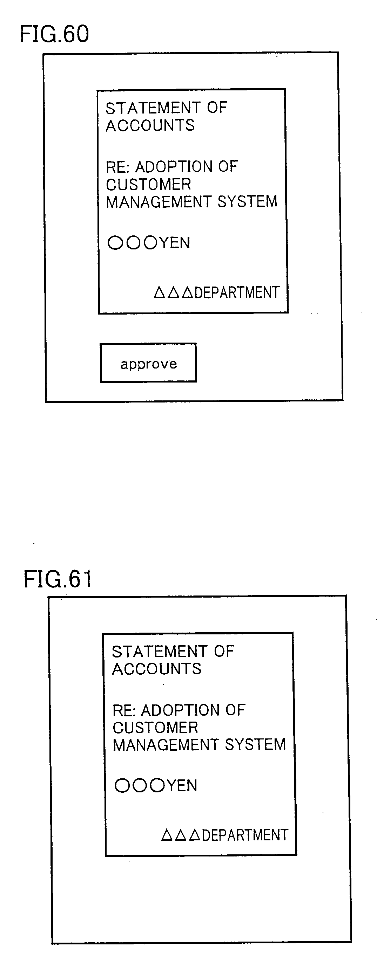

In application 405 illustrated in Fig. 59, a similar "switch" element is assigned to the portion of displaying the button. Thereby, display and non-display of the button ("approve" button") can be selected as illustrated in Figs. 60 and 61, and it is possible to employ, e.g., such a display manner that an "approve" button is displayed on a document for approval to only employees having authority to approve.

### [Eighth Embodiment]

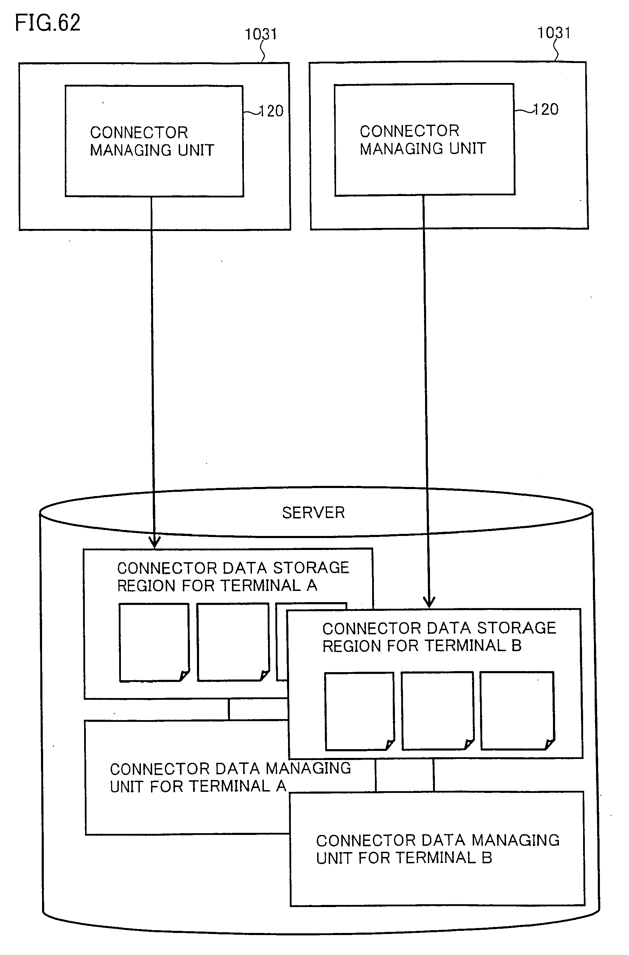

As illustrated in Fig. 62, an eighth modification has a distinctive feature that a server connected to a network holds the connector data storage region and the connector data managing unit, and connector managing unit 1031 in service utilization terminal 1031 holds only the locations of the connector data storage region and connector data managing unit held by the server.

In step S1044, a search is conducted on the connector data storage region held by the server. When the connector in question is present in the connector data storage region, the connector in question is obtained from the connector data storage region in step S 1052.

When the connector data in question is not found, the connector in question is downloaded from connector provision server 280 in step S1051, and is stored in the connector data storage region of service utilization terminal 1031. The server holds the connector data storage regions and connector data managing units for the plurality of service utilization terminals in a fashion that the connector data storage regions and connector data managing units are related to the service utilization terminals, respectively.

Owing to the above structure, the server in this specific example can determine the state of utilization of the connectors in the respective service utilization terminals, and the server can collectively deal with the charging processing and authorizing processing required at the time of utilizing the functions.

### [Ninth Modification]

When a value entered in accordance with a user interface of an application is processed by accessing predetermined service provision server 210 utilizing the connector, service provision server 210 actually operates to process the input value utilizing a method that is a predetermined function. This processing will now be described as a ninth modification.

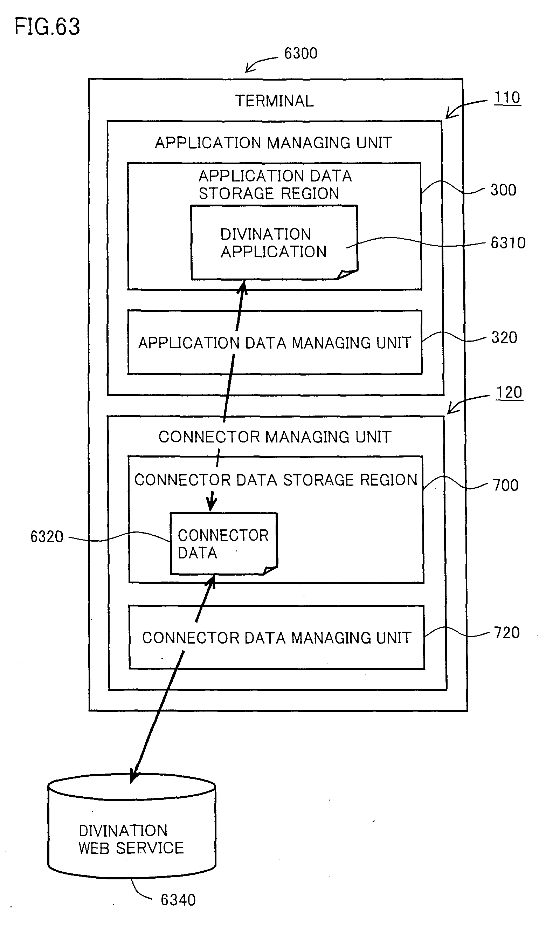

Referring to Fig. 63, a terminal 6300 of the ninth modification includes application managing unit 110 formed of application data storage region 300 and application data managing unit 320. Application data storage region 300 has stored a divination application 6310.

Terminal 6300 includes connector managing unit 120 formed of connector data storage region 700 and connector data managing unit 720. Connector data storage region 700 has stored connector data 6320. Further, connector data 6320 includes information for utilizing a divination Web service 6340 outside the terminal. Divination Web service 6340 is a service providing a method of divination.

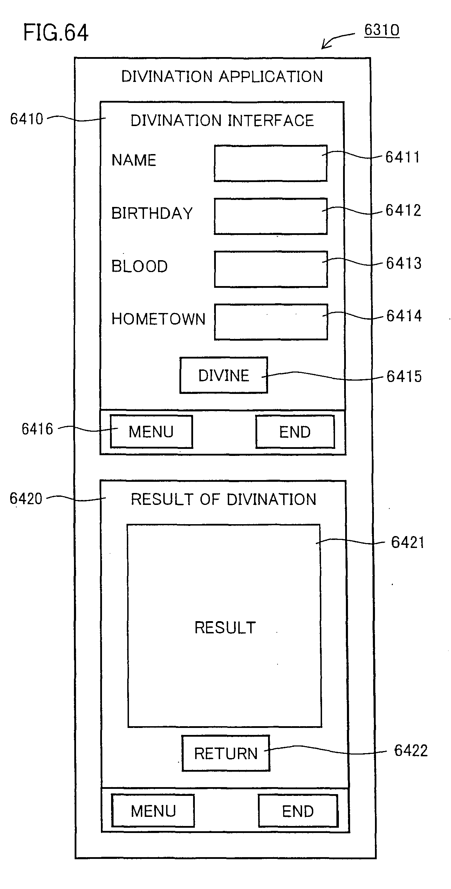

Referring to Fig. 64, divination application 6310 includes two screens, i.e., a divination interface 6410 for performing divination, and a divination result screen 6420 for displaying a result of the divination.

In divination interface 6410, forms 6411 - 6414 are prepared for entering data to be transmitted for utilizing the divination Web service. In this embodiment, there are prepared the form of NAME 6411 for entering a name, the form of BIRTHDAY 6412 for entering a birthday, the form BLOOD 6413 for entering a blood type and the form of HOMETOWN 6414 for entering a hometown. When a "divine" button 6415 is depressed, the data entered into these forms are transmitted to the divination Web service via the connector. When a menu button 6416 is depressed, various menu items are displayed for selection.

On divination result screen 6420, there are prepared a REUSLT region 6421 for displaying the result and a RETURN button 6422 for returning to the divination interface.

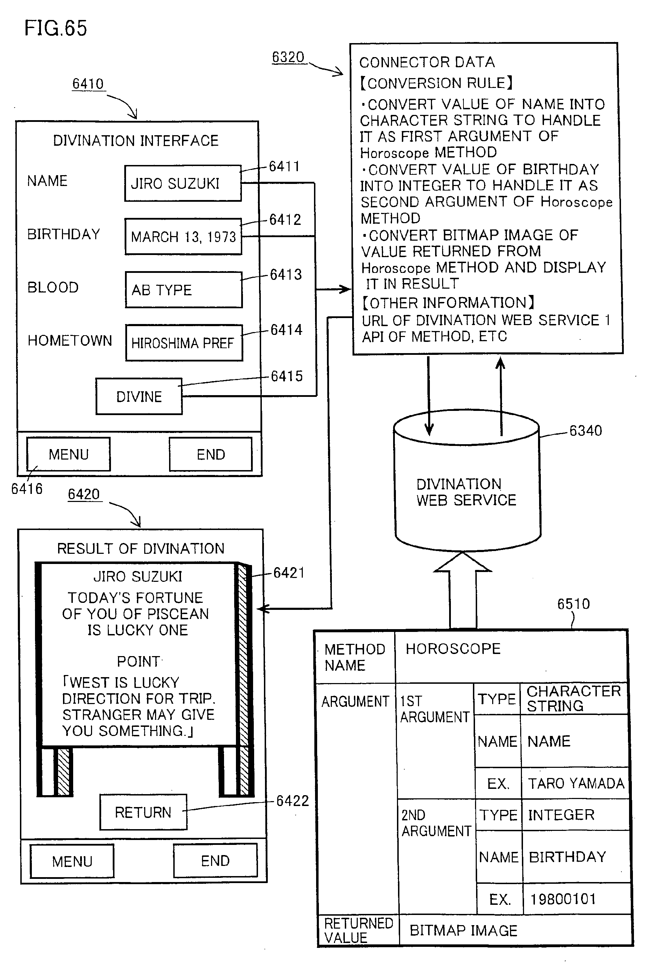

Fig. 65 illustrates a method 6510 which provides a divination Web service 6340 for utilizing divination Web service 6340 from divination application 6310. More specifically, Fig. 65 illustrates that method 6510 provided by divination Web service 6340 has a name of "Horoscope", and a first argument of the method is of a type of a character string, and has a name of "name". A second argument of the method is of a type of an integer, and has a name of "birthday", and a return value of the method is a bitmap image.

Referring to Fig. 65, when a user depresses "divine" button 6415 on divination interface 6410 after entering a value of "Jiro Suzuki" in the form of NAME 6411, a value of "March 13, 1973" in BIRTHDAY 6412, a value of "AB type" in BLOOD 6413 and a value of "Hiroshima pref" in HOMETOWN 6414, connector data 6320 for utilizing divination Web service 6340 is called.

It is assumed that connector data 6320 describes an URL representing a location of divination Web service 6340, a specification of an API (application) of a method provided there and others. Connector data 6320 further describes a conversion rule for passing the data entered via divination interface 6410 to divination method 6510 provided by divination Web service 6340, and a conversion rule for displaying a value returned from divination method 6510 on divination result screen 6420. Thus, instead of the input/output definition defining the passing of the data to the function determined by the connector, the connector data in this modification includes the input/output definition defining the passing of the data to the method which is a function utilized for using the function or capability determined by the connector.

The following conversion rules are specifically described in connector data 6320 for converting the data provided from divination interface 6410 for utilizing divination method 6510.
(Rule 1) A value entered in form NAME 6411 is converted into a character string for use as a first argument of method 6510 named "Horoscope".
(Rule 2) A value entered in form BIRTHDAY 6412 is converted into an integer for use as a second argument of method 6510 named "Horoscope".
(Rule 3) A bitmap image of a value returned from method 6510 named "Horoscope" is converted into a Jpeg image, and is displayed in region RESULT 6421.

According to the rule 1, an external function managing unit, which is included in connector data managing unit 720 but is not illustrated in Fig. 63, converts the value "Jiro SUZUKI" entered in form NAME 6411 of divination interface 6410 into a character string, and passes the converted value as the first argument of the Horoscope method of divination Web service 6340 to divination Web service 6340 called by the external function calling unit not illustrated in Fig. 63. According to the rule 2, the value "March 13, 1973" entered in form BIRTHDAY 6412 of divination interface 6410 is converted into an integer, and is passed to divination Web service 6340 as a second argument of the Horoscope method of divination Web service 6340. According to the rule 3, the bitmap image, which is a value returned from the Horoscope method of divination Web service 6340 is converted into a Jpeg image, and is displayed in region RESULT 6421 of divination result screen 6420.

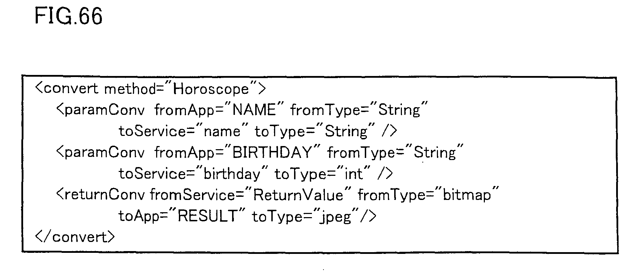

Referring to Fig. 66, it is declared in a description <convert method = "Horoscope"> that this description is a conversion rule for the Horoscope method.

In a description <paramConv fromApp = "NAME" fromType = "String" toService = "name" to Service = "name" toType = "String"/>, it is declared that the data passed as a character string (String) with name "NAME" from the application is converted into a character string (String), and is passed to the argument of name "name" on a service side. In this case, since both data are character strings, the conversion is actually unnecessary.

In a description <paramConv fromApp = "BIRTHDAY" fromType = "String" toService = "birthday" toType = "int"/>, it is declared that the data passed as a character string (String) with a name "BIRTHDAY" from the application is converted into an integer (int), and is passed to the argument named "birthday" on the service side.

In a description <returnConv fromService = "ReturnValue" fromType = "bitmap" toApp = "RESULT" toType = "jpeg"/>, it is declared that a bitmap image (bitmap), which is a value returned from the service side, is converted into a Jpeg image (jpeg), and is displayed in a region "RESULT" on the application side.

In a description </convert>, it is declared that the definition of the conversion rules for the Horoscope method ends.

When the data provided from divination interface 6410 is converted in connector data 6320 according to the descriptions in Fig. 66, and divination method 6510 is utilized, the bit map image, which is a value returned from divination Web service 6340, is converted into the Jpeg image, and is displayed in region RESULT 6421 of divination result screen 6420 as illustrated in Fig. 65.

As described above, the connector data does not includes the input/output definition defining the passing of the data to the function determined by this connector, but alternatively includes the input/output definition defining the data for the method which is a function utilized for using the function or capability determined by the connector. Thereby, the value provided in the application is not required to be a value corresponding to the argument of the method. Therefore, it is not necessary to prepare the interface of the application in view of the method to be utilized, which facilitates preparation of the application.

Owing to the above structure of the connector data, it is possible to utilize a plurality of different Web services from one application.

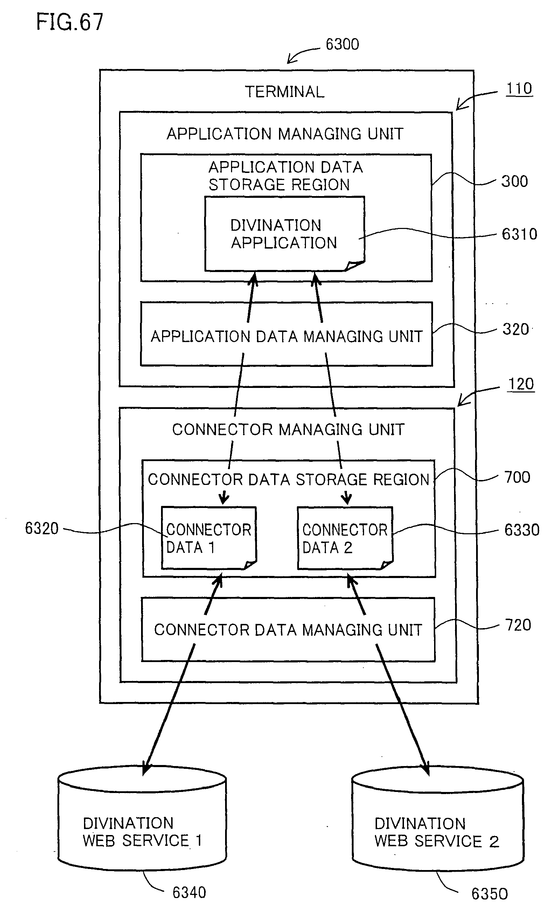

Referring to Fig. 67, terminal 6300 in this case includes application managing unit 110 including application data storage region 300 and application data managing unit 320, similarly to the case illustrated in Fig. 63. It is assumed that application data storage region 300 has stored divination application 6310.

Terminal 6300 includes connector managing unit 120 including connector data storage region 700 and connector data managing unit 720. Connector data storage region 700 stores connector data 1 (6320) and connector data 2 (6330). Connector data 1 (6320) describes information for utilizing divination Web service 1 (6340) outside the terminal, and connector data 2 (6330) described information for utilizing divination Web service 2 (6350) outside the terminal.

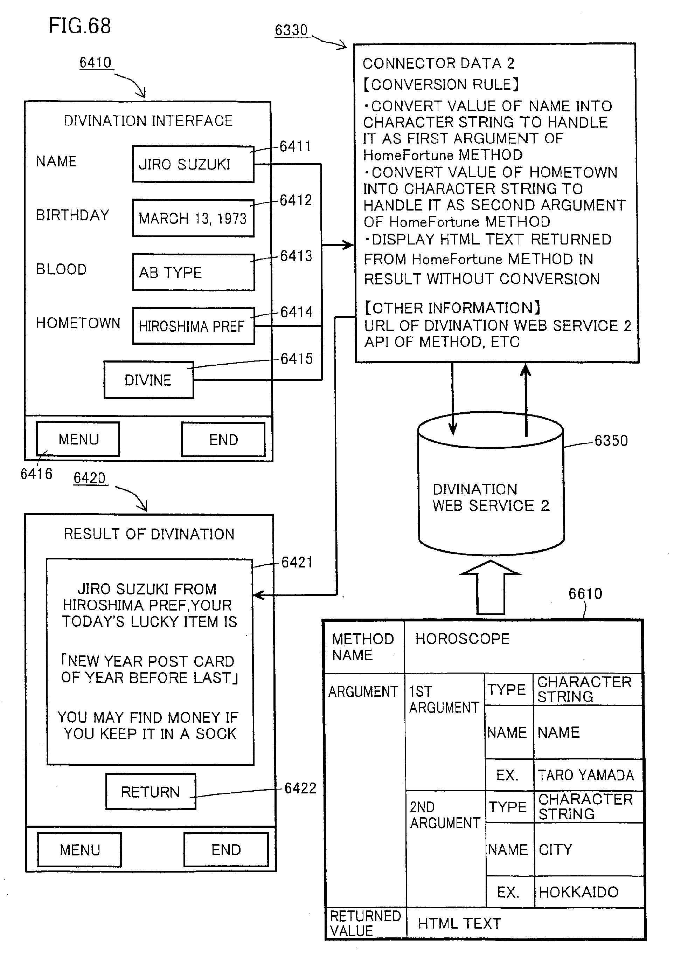

The processing for utilizing divination Web service 1 (6340) from a divination application 1 (6320) is already described with reference to Fig. 65. Processing for utilizing divination Web service 2 (6350) from a divination application 2 (6330) will now be described with reference to Fig. 68. Fig. 68 illustrates a method 6610 provided by Web service 2 (6350) for utilizing divination Web service 2 (6350) from divination application 2 (6330). More specifically, Fig. 66 illustrates that the name of method provided by Web service 2 (6350) is "HomeFortune", the type and name of the first argument of the method are a character string and "name", respectively, the type and name of the second argument of the method are a character string and "city", respectively, and a returned value of the method is an HTML text.

Referring to Fig. 68, when "divine" button 6415 is depressed on divination interface 6410 after entering a value of "Jiro Suzuki" in the form of NAME 6411, a value of "March 13, 1973" in BIRTHDAY 6412, a value of "AB type" in BLOOD 6413 and a value of "Hiroshima pref" in HOMETOWN 6414, connector data 2 (6330) for utilizing divination Web service button 2 (6350) is called.

It is likewise assumed that connector data 2 (6330) describes an URL representing a location of divination Web service 2 (6350), a specification of an API (application) of a method provided there and others, similarly to connector data 1 (6320). Connector data 2 (6330) further describes a conversion rule for passing the data provided from divination interface 6410 to a divination method 6610 provided by divination Web service 2 (6350), and a conversion rule for displaying a value returned from divination method 6610 on divination result screen 6420.

The following conversion rules are specifically described in connector data 2 (6330) for converting the data provided from divination interface 6410 for utilizing divination method 6610.
(Rule 1) A value entered in form NAME 6411 is converted into a character string for use as a first argument of method 6610 named "HomeFortune".
(Rule 2) A value entered in form HOMETOWN 6414 is converted into a character string for use as a second argument of method 6610 named "HomeFortune".
(Rule 3) An HTML text of a value returned from method 6610 named "HomeFortune" is displayed in region RESULT 6421 as it is.

According to the rule 1, an external function managing unit, which is included in connector data managing unit 720 but is not illustrated in Fig. 67, converts the value "Jiro SUZUKI" entered in form NAME 6411 of divination interface 6410 into a character string, and passes the converted value as the first argument of the HomeFortune method of divination Web service 2 (6350) to divination Web service 6340 called by the external function calling unit not illustrated in Fig. 67. According to the rule 2, the value "Hiroshima pref" entered in form HOMETOWN 6414 of divination interface 6410 is converted into a character string, and is passed to divination Web service 6340 as a second argument of the HomeFortune method of divination Web service 2 (6350). According to the rule 3, the HTML text, which is a value returned from the HomeFortune method of divination Web service 2 (6350), is displayed in region RESULT 6421 of divination result screen 6420 as it is.

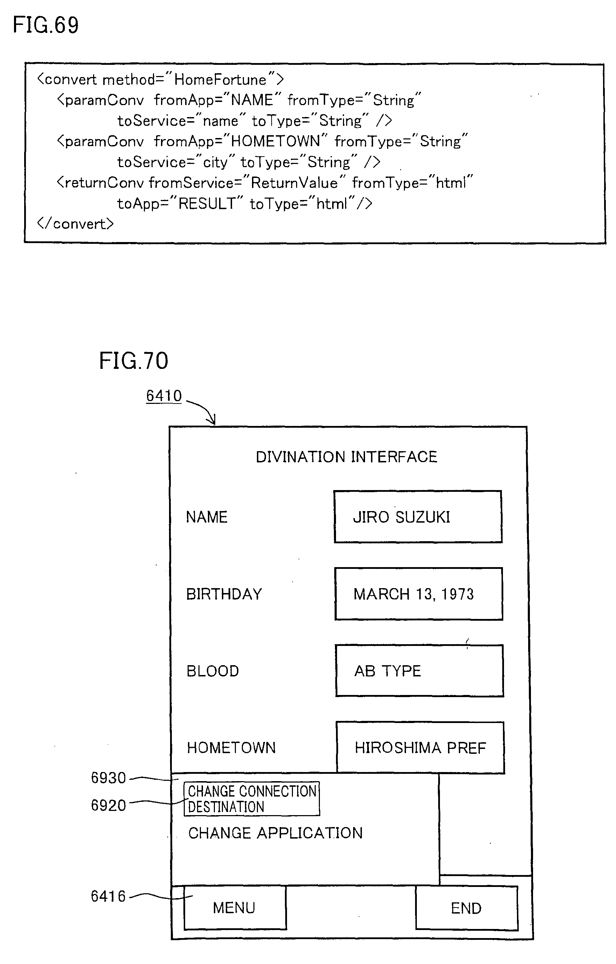

Referring to Fig. 69, it is declared in a description <convert method = "HomeFortune"> that this description is a conversion rule for the HomeFortune method.

In a description <paramConv fromApp = "NAME" fromType = "String" toService = "name" toType = "String"/>, it is declared that the data passed as a character string (String) with name "NAME" from the application is converted into a character string (String), and is passed to the argument of name "name" on a service side. In this case, since both data are character strings, the conversion is actually unnecessary.

In a description <paramConv fromApp = "HOMETOWN" fromType = "String" toService = "city" toType = "String"/>, it is declared that the data passed as a character string (String) with name "HOMETOWN" from the application is converted into a character string (String), and is passed to the argument of name "name" on a service side. In this case, since both data are character strings, the conversion is actually unnecessary.

In a description <returnConv fromService = "ReturnValue" fromType = "html" toApp = "RESULT" toType = "HTML"/>, it is declared that an HTML text (html), which is a value returned from the service side, is converted into an HTML text (html), and is displayed in a region "RESULT" on the application side. In this case, since both data are HTML texts, the conversion is actually unnecessary.

In a description </convert>, it is declared that the definition of the conversion rules for the HomeFortune method ends.

When the data provided from divination interface 6410 is converted in connector data 2 (6330) according to the descriptions in Fig. 69, and divination method 6610 is utilized, the HTML text, which is a value returned from divination Web service 2 (6350), is displayed in region RESULT 6421 of divination result screen 6420 as illustrated in Fig. 68.

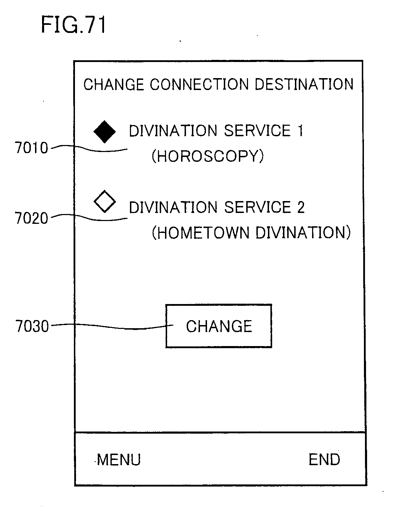

As described above, when two Web services 6340 and 6350 can be utilized from one application 6310, switching is performed between connection destinations, i.e., Web services 6340 and 6350 as illustrated in Figs. 70 and 71. Figs. 70 and 71 illustrate a specific example of a method of changing the destination between divination Web services 6340 and 6350 for use from application 6310. Fig. 70 illustrates a specific example of display of divination interface 6410 of application 6310 which can utilize two divination Web services 6340 and 6350. More specifically, the display of divination interface 6410 illustrated in Fig. 70 is a specific example which is performed when a user depresses a menu button 6416 on divination interface 6410 illustrated in Fig. 64, and a menu list 6920 is displayed.

In a state illustrated in Fig. 70, when a user selects a connection destination change 6930 which is a selectable item displayed on menu list 6920, the display of divination interface 6410 changes into display illustrated in Fig. 71. More specifically, when the user selects connection destination change 6930 on displayed divination interface 6410 in Fig. 70, divination interface 6410 including a list of selectable connection destinations is displayed as illustrated in Fig. 71. In this modification, the displayed list includes two selectable items, i.e., a divination service 1 (horoscope) 7010 and a divination service 2 (hometown divination) 7020.

When divination interface 6410 illustrated in Fig. 71 is displayed, the user selects the connection destination from the divination services 1 and 2 (7010 and 7020), and depresses a change button 7030 so that the connection destination is changed. Thus, the connection destination is selected on displayed divination interface 6410 illustrated in Fig. 71 so that connector data 1 (6320) or connector data 2 (6330) is decided as the connector data for utilizing divination Web service 1 (6340) or divination Web service 2 (6350) in application 6310, and connector data managing unit 720 utilizes the function of the external function managing unit (not illustrated) according to details of description of the decided content data, and calls the function of divination Web service 1 or 2 (6340 or 6350).

According to the ninth modification, as described above, the application data and the connector data are separated from each other, and are managed independently of each other in terminal 630 so that the single application can utilize a plurality of different Wed services. Therefore, the application can be produced easily in spite of the fact that the type of the application is a Web service. Regardless of the Web service to be used, the data input can be performed through the same user interface so that the operation by the user can be easy.

The service utilizing method in the service utilization terminal and the connector providing processing in the connector provision server can be provided as programs. These programs can be provided as program products in which the programs are recorded on computer-readable record mediums such as flexible discs, CD-ROMs, ROMs, RAMs or memory cards. Also, the programs may be provided by recording them on record mediums such as hard discs arranged in computers. The programs may be provided by the download over networks.

The program product thus provided is executed by installing the program in a program storing unit such as a hard disc. The program product includes a program itself and a record medium storing the program.

Although the present invention has been described and illustrated in detail, it is clearly understood that the same is by way of illustration and example only and is not to be taken by way of limitation, the spirit and scope of the present invention being limited only by the terms of the appended claims.

### Industrial Applicability

According to the invention, as described above, the function provided over the network can be safely provided to the users with high convenience so that the invention can be advantageously applied to the service utilization terminal providing the function, which is provided over the network, to the users.

## Claims

1. A service utilization terminal comprising:
a connector obtaining unit (120) referring to a description of an application, and obtaining a connector being information for specifying a function required for executing said application; and
a function utilizing unit (130, 140) accessing a location of said function described in said connector based on access information relating to the location, and utilizing said function specified by said connector.

2. The service utilization terminal according to claim 1, wherein
said access information described in said connector is a URI (Uniform Resource Identifier) for accessing said location.

3. The service utilization terminal according to claim 1, wherein
said function utilizing unit (130, 140) obtains result from said function by passing the information defined by said connector to said function specified by said connector.

4. The service utilization terminal according to claim 3, wherein
said connector includes data conversion information, and
said function utilizing unit (130, 140) converts data obtained from said application based on said data conversion information, and passes the converted data to said function.

5. The service utilization terminal according to claim 3 or 4, wherein
said function utilizing unit (130, 140) converts a result obtained from said function based on said data conversion information, and passes the converted result to said application.

6. The service utilization terminal according to claim 5, wherein
said application is an application outputting the result obtained from said function, converted by said function utilizing unit (130, 140) and passed from said function utilizing unit (130, 140).

7. The service utilization terminal according to any one of the preceding claims 1 to 6, further comprising:
a first connector determining unit (110) comparing identification information unique to said application with identification information unique to said connector when executing said application, and determining whether said function can be utilized using said connector or not.

8. The service utilization terminal according to claim 7, wherein
said application includes unique information customized according to the service utilization terminal,
said connector includes unique information customized according to the service utilization terminal, and
said first connector determining unit (110) compares identification information unique to said customized application with identification information unique to said connector, and determines whether said function can be determined or not, using said connector when service utilization terminal executes said application.

9. The service utilization terminal according to any one of the preceding claims 1 to 8, wherein
said connector obtaining unit (120) obtains a connector held by a different device by accessing said different device, and
said service utilization terminal further comprises a connector storing unit (700) storing said obtained connector.

10. The service utilization terminal according to any one of the preceding claims 1 to 9, wherein
said application includes validity information including at least one of information relating to a valid period of said application and a number of allowed operations of utilizing said application, and
said service utilization terminal further comprises an application determining unit (320) referring to said validity information and determining whether said application can be executed or not.

11. The service utilization terminal according to any one of the preceding claims 1 to 10, wherein
said connector includes validity information including at least one of information relating to a valid period of said application and a number of allowed operations of utilizing said connector, and
said service utilization terminal further comprises a second connector determining unit (120) referring to said validity information when executing said application, and determining whether said function can be specified or not, using said connector.

12. The service utilization terminal according to claim 11, wherein
said connector obtaining unit (120) obtains a new connector when said second connector determining unit (120) determines that it is impossible to specify said function, using said connector.

13. The service utilization terminal according to any one of the preceding claims 1 to 12, wherein
a description of said application includes a connector condition provided with an obtaining destination for obtaining said connector and at least one of information unique to said connector and information relating to said function specified by said connector, and
said connector obtaining unit (120) obtains a connector satisfying said connector condition from said obtaining destination.

14. The service utilization terminal according to any one of the preceding claims 1 to 13, wherein
said connector obtaining unit (120) includes a connector selecting unit (14, 120) selecting a predetermined connector from a plurality of different connectors as a connector to be obtained by said connector obtaining unit (120) when executing said application, and
said function utilizing unit (130, 140) utilizes a function specified by said selected predetermined connector among a plurality of different functions specified by said plurality of different connectors.

15. The service utilization terminal according to any one of the preceding claims 1 to 14, further comprising:
an application obtaining unit (110) obtaining said application.

16. A mobile telephone terminal comprising:
the service utilization terminal according to any one of the preceding claims 1 to 15.

17. A television receiver terminal comprising:
the service utilization terminal according to any one of the preceding claims 1 to 15.

18. A connector provision server comprising:
a connector storing unit (900) storing a connector being information including access information for a location of said function for specifying a function required for executing an application;
a connector managing unit (920) managing said connector stored in said connector storing unit (900); and
a connector transmitting unit (530) receiving a request for said connector from a service utilization terminal, and transmitting said required connector to said service utilization terminal.

19. The connector provision server according to claim 18, wherein
said connector includes identification information corresponding to said application.

20. The connector provision server according to claim 18 or 19, wherein
said connector includes validity information including at least one of information relating to a valid period of said application and a number of allowed operations of utilizing said connector.

21. The connector provision server according to any one of the preceding claims 18 to 20, wherein
the access information described in said connector is a URI (Uniform Resource Identifier) for accessing said location.

22. The connector provision server according to any one of the preceding claims 18 to 21, further comprising:
a terminal managing unit (510) obtaining terminal information of said service utilization terminal requiring said connector; and
a determining unit (920) determining based on said terminal information whether said required connector is to be transmitted to said service utilization terminal or not.

23. The connector provision server according to any one of the preceding claims 18 to 22, further comprising:
a terminal managing unit (510) obtaining terminal information of said service utilization terminal requiring said connector; and
a first editing unit (920) editing said required connector based on said terminal information.

24. The connector provision server according to any one of the preceding claims 18 to 23, further comprising:
a second editing unit (920) editing said required connector according to a form of a location of said function.

25. The connector provision server according to claim 24, wherein
said second editing unit (920) changes access information described in said connector into access information for access to a predetermined location among a plurality of locations when said function are located at said plurality of locations, respectively.

26. The connector provision server according to claim 24, wherein
said second editing unit (920) changes access information described in said connector into access information for access to said connector provision server, and
said connector provision server further comprises a relay unit (920) relaying access made to said connector provision server by the service utilization terminal requiring said function based on said changed access information to said location of said function.

27. A data structure of connector data being information stored in storing means of a service utilization terminal for specifying a function required for executing an application in said service utilization terminal, and being information specified by a description of said application, comprising:
identifying information (802) of said connector data for causing said service utilization terminal to specify said connector data with reference to the description of said application;
access information (805) for accessing a location of said function by said service utilization terminal;
input definition information (805) defining information to be passed to said function by said service utilization terminal accessing said location according to said access information; and
output definition information (805) defining information to be received from said function by the service utilization terminal with respect to said information passed to said function.

28. The data structure of the connector data according to claim 27, wherein
said access information (805) is a URI (Uniform Resource Identifier) for accessing said location by said service utilization terminal.

29. The data structure of the connector data according to claim 27 or 28, further comprising:
validity information (803, 804) including at least one of information relating to a valid period of said connector data in said service utilization terminal and a number of allowed operations of utilizing said connector in said service utilization terminal, wherein said validity information (803, 804) enables said service utilization terminal to determine whether said function can be specified using said connector data or not.

30. The data structure of the connector data according to any one of the preceding claims 27 to 29, further comprising:
identification information (802) of an application identifying the application, said identification information of the application enabling said service utilization terminal to determine whether said function can be specified using said connector data or not, when executing said application.

31. The data structure of the connector data according to any one of the preceding claims 27 to 30 further comprising:
unique information (802) customized according to the service utilization terminal, said unique information (802) enabling said service utilization terminal to determine whether said function can be specified using said connector data or not, when executing said application.

32. The data structure of the connector data according to any one of the preceding claims 27 to 31, wherein
said access information (805) can be edited in a connector provision server providing said connector data.
